# EUROPÄISCHE PATENTANMELDUNG

(11) **EP 2 193 713 A1**
(43) Veröffentlichungstag der Anmeldung: **09.06.2010**
(21) Anmeldenummer: 08170793.7
(22) Anmeldetag: 05.12.2008
(51) Int. Cl.: A01N 43/40, A01P 7/04

(54) **Verfahren zur Bekämpfung tierischer Schädlinge ohne Schädigung bestäubender Insekten**

(71) Anmelder: Bayer CropScience AG, 40789 Monheim (DE)
(72) Erfinder: Die Erfindernennung liegt noch nicht vor

(57) **Zusammenfassung**

Die vorliegende Erfindung betrifft ein Verfahren zur selektiven Bekämpfung tierischer Schädlinge mit Verbindungen der Formel (I) 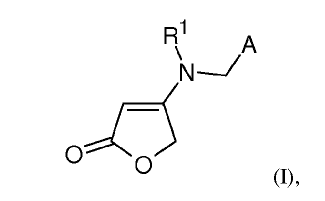 worin
R¹ und A die in der Beschreibung angegebenen Bedeutungen haben,

wobei bestäubende Insekten nicht geschädigt werden.

## Beschreibung

Die vorliegende Erfindung betrifft ein Verfahren zur selektiven Bekämpfung tierischer Schädlinge mit Enaminocarbonylverbindungen, wobei bestäubende Insekten bei Kontakt mit den Enaminocarbonylverbindungen nicht geschädigt werden.

Enaminocarbonylverbindungen sind beispielsweise als Mittel zur Bekämpfung von tierischen Schädlingen, insbesondere Insekten und Akariden, bekannt geworden und können nach bekannten Verfahren hergestellt werden (z. B. EP 0 539 588 A, WO 2006/037475 A, WO 2007/115643, WO 2007/115644 und WO 2007/115646). Des Weiteren ist die insektizide und akarizide Wirkungssteigerung für einzelne Enaminocarbonylverbindungen mittels Zugabe von geeigneten Salzen und gegebenenfalls Additiven beschrieben (WO 2007/068355).

Eine wichtige Anforderung an insektizide Wirkstoffe ist, dass diese Wirkstoffe keine schädigende Wirkung auf bestäubende Insekten wie Bienen oder Hummeln oder auf deren Brutentwicklung ausüben.

Bienen bestäuben Pflanzen und tragen so erheblich zum Ernteerfolg in der Landwirtschaft bei. Sie übernehmen wichtige Funktionen im Ökosystem, denn ohne die Bestäubungsleistung der Bienen fehlten anderen Tierarten ein Teil ihrer Nahrungs- und Lebensgrundlage. Rund ein Drittel der globalen Lebensmittelproduktion und wahrscheinlich zwei Drittel der wichtigsten Nahrungspflanzen sind von bestäubenden Insekten, und dabei insbesondere von Bienen, abhängig. Dem Faktor Vielzahl der verschiedenen Arten kommt hierbei eine besondere Bedeutung zu. Auch unsere einheimischen Wildbienen und Hummeln sind unverzichtbar für die Bestäubung.

Französische und deutsche Wissenschaftler haben zum ersten Mal berechnet, welche Werte Insekten durch die Bestäubung von Agrarpflanzen schaffen: Der ökonomische Nutzen der Tiere lag im Jahr 2005 bei etwa 150 Milliarden Euro, wie das Helmholtz-Zentrum für Umweltforschung (UFZ) in Halle mitteilte. Dies entspreche knapp einem Zehntel des Gesamtwertes der weltweiten Nahrungsmittelproduktion. Sollten die bestäubenden Insekten komplett verschwinden, entstünde laut der Studie ein Schaden von 190 bis 310 Milliarden Euro pro Jahr. Mit jeweils 50 Milliarden Euro Verlust wären Obst- und Gemüseproduzenten besonders schwer vom Fehlen der Insekten betroffen, gefolgt von den Produzenten von essbaren Ölfrüchten wie Raps, Sonnenblumen oder Oliven mit 39 Milliarden Euro (http://www.welt.de/wissenschaft/tierwelt/article2451188/Oekonomischer-Wert-der-Bestaeuber-ist-exorbitant.html).

Neben der Bestäubung durch bestäubende Insekten hat auch die Bekämpfung tierischer Schädlinge einen entscheidenden Einfluss auf den Ertrag von Agrarpflanzen. Trotz der großen Bedeutung des Schutzes bestäubender Insekten beim Einsatz von Insektiziden haben viele Insektizide toxische Wirkungen auf bestäubende Insekten und/oder deren Brutentwicklung. Beispiele hierfür sind Dichlorphos, Chlorpyrifos, Monocrotophos, Dicrotophos, Phosmet, Malathion, Methomyl, Dimethoate, Phospamidon, Fenoxycarb, Lindan, Thiamethoxam oder Dinotefuran.

Die Toxizität bestimmter Insektizide gegenüber bestäubenden Insekten kann sich auf unterschiedliche Weise und in verschiedenen Entwicklungsstadien der Insekten auswirken und es können unterschiedliche Toxizitäts-Endpunkte bestimmt werden. Im Falle der Honigbiene können beispielweise die Mortalität von Arbeiterbienen, Drohnen oder Puppen, die Aktivität der Futtersuche oder die Entwicklung der Kolonie, beurteilt beispielsweise an der Speicherung von Honig und Pollen, der Koloniestärke (gemessen an der besetzten Fläche der Wabe), der Effekte auf die Brutentwicklung (Eier, Larven und Puppen) oder dem Gewicht des Bienenstocks, als Toxizitäts-Endpunkte bestimmt werden. Im Falle der Hummel können beispielsweise die Flug- und die Bestäubungsaktivität und der Ertrag als Toxizitäts-Endpunkte bestimmt werden.

Es ist weder aus der Struktur noch aus dem Wirkmechanismus eines neuen Insektizids möglich vorherzusagen, ob das Insektizid eine schädliche Wirkung auf bestäubende Insekten hat oder für diese unbedenklich ist.

Überraschenderweise wurde in der vorliegenden Erfindung ein Verfahren zur selektiven Bekämpfung tierischer Schädlinge mit Enaminocarbonylverbindungen der Formel (I) 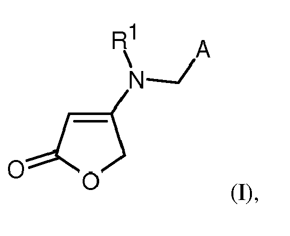 in welcher
- A: für Pyrid-2-yl oder Pyrid-4-yl steht oder für Pyrid-3-yl, welches gegebenenfalls in 6-Position substituiert ist durch Fluor, Chlor, Brom, Methyl, Trifluormethyl oder Trifluormethoxy oder für Pyridazin-3-yl, welches gegebenenfalls in 6-Position substituiert ist durch Chlor oder Methyl oder für Pyrazin-3-yl oder für 2-Chlor-pyrazin-5-yl oder für 1,3-Thiazol-5-yl, welches gegebenenfalls in 2-Position substituiert ist durch Chlor oder Methyl, oder
- A: für einen Rest Pyrimidinyl, Pyrazolyl, Thiophenyl, Oxazolyl, Isoxazolyl, 1,2,4-Oxadiazolyl, Isothiazolyl, 1,2,4-Triazolyl oder 1,2,5-Thiadiazolyl steht, welcher gegebenenfalls durch Fluor, Chlor, Brom, Cyano, Nitro, C₁-C₄-Alkyl (welches gegebenenfalls durch Fluor und/oder Chlor substituiert ist), C₁-C₃-Alkylthio (welches gegebenenfalls durch Fluor und/oder Chlor substituiert ist), oder C₁-C₃-Alkylsulfonyl (welches gegebenenfalls durch Fluor und/oder Chlor substituiert ist), substituiert ist,
oder
- A: für einen Rest 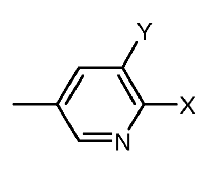
steht, in welchem
- X: für Halogen, Alkyl oder Halogenalkyl steht
- Y: für Halogen, Alkyl, Halogenalkyl, Halogenalkoxy, Azido oder Cyan steht und
- R¹: für Alkyl, Halogenalkyl, Alkenyl, Halogenalkenyl, Alkinyl, Cycloalkyl, Cycloalkylalkyl, Halogencycloalkyl, Alkoxy, Alkoxyalkyl, oder Halogencycloalkylalkyl steht,
gefunden, wobei bestäubende Insekten bei Kontakt mit den Verbindungen der Formel (I) nicht geschädigt werden.

Die erfindungsgemäße Wirksamkeit von Verbindungen der Formel (I) zur Bekämpfung tierischer Schädlinge, wobei bestäubende Insekten bei Kontakt mit den Verbindungen der Formel (I) nicht geschädigt werden, war aus der Struktur der Verbindungen oder deren bekannter Wirkung gegenüber tierischen Schädlingen nicht vorhersehbar. Überraschend ist dieser Effekt vor allem, da die Verbindungen der Formel (I) insbesondere gegen eine Vielzahl von Schädlings-Insekten verschiedener Ordnungen und Familien wirken, weswegen es nicht zu erwarten war, dass bestäubende Insekten, insbesondere der Superfamilie der Apoidea, durch die Anwendung von Verbindungen der Formel (I) nicht geschädigt werden.

Im Sinne der vorliegenden Erfindung bedeutet "selektive" Bekämpfung tierischer Schädlinge, dass zwar tierische Schädlinge, insbesondere Schädlings-Insekten, bekämpft werden, dabei aber bestäubende Insekten, insbesondere der Superfamilie der Apoidea, nicht geschädigt werden.

Im Sinne der vorliegenden Erfindung bedeutet "Kontakt" mit den Verbindungen der Formel (I) beispielsweise, dass bestäubende Insekten Blüten befliegen, die zuvor mit Verbindungen der Formel (I) besprüht oder gegossen wurden oder dass bestäubende Insekten auf den Wegen des Versuchsbereichs, zwischen den Pflanzen oder über die Atemluft mit den Verbindungen der Formel (I) in Kontakt kommen. Der Kontakt mit den Verbindungen der Formel (I) kann topical, tarsal (über die Gliedmaßen) oder oral erfolgen. Außerdem kann die Brut durch Fütterung mit kontaminiertem Pollen oder Nektar mit den Verbindungen der Formel (I) in Kontakt kommen.

Dass bestäubende Insekten nicht geschädigt werden lässt sich beispielsweise daran erkennen, dass die Mortalität bestäubender Insekten und von deren Entwicklungsstadien nicht gesteigert ist, dass die Aktivität von Nahrungssuche und Bestäubung und die Flugaktivität bestäubender Insekten unverändert sind und dass die Brutentwicklung bestäubender Insekten, gemessen am Anteil von Eiern, Larven und Puppen an der Belegung der Wabenzellen, unverändert ist.

Bevorzugt sind für das erfindungsgemäße Verfahren Verbindungen der Formel (I), in welcher die Reste die folgende Bedeutung haben:
- A: steht bevorzugt für 6-Fluor-pyrid-3-yl, 6-Chlor-pyrid-3-yl, 6-Brom-pyrid-3-yl, 6-Methylpyrid-3-yl, 6-Trifluormethyl-pyrid-3-yl, 6-Trifluormethoxypyrid-3-yl, 6-Chlor-1,4-pyridazin-3-yl, 6-Methyl-1,4-pyridazin-3-yl, 2-Chlor-1,3-thiazol-5-yl oder 2-Methyl-1,3-thiazol-5-yl, 2-Chlor-pyrimidin-5-yl, 2-Trifluormethyl-pyrimidin-5-yl, 5,6-Difluor-pyrid-3-yl, 5-Chlor-6-fluor-pyrid-3-yl, 5-Brom-6-fluor-pyrid-3-yl, 5-Iod-6-fluor-pyrid-3-yl, 5-Fluor-6-chlor-pyrid-3-yl, 5,6-Dichlor-pyrid-3-yl, 5-Brom-6-chlor-pyrid-3-yl, 5-Iod-6-chlorpyrid-3-yl, 5-Fluor-6-brom-pyrid-3-yl, 5-Chlor-6-brom-pyrid-3-yl, 5,6-Dibrom-pyrid-3-yl, 5-Fluor-6-iod-pyrid-3-yl, 5-Chlor-6-iod-pyrid-3-yl, 5-Brom-6-iod-pyrid-3-yl, 5-Methyl-6-fluor-pyrid-3-yl, 5-Methyl-6-chlor-pyrid-3-yl, 5-Methyl-6-brom-pyrid-3-yl, 5-Methyl-6-iod-pyrid-3-yl, 5-Difluormethyl-6-fluor-pyrid-3-yl, 5-Difluormethyl-6-chlor-pyrid-3-yl, 5-Difluormethyl-6-brom-pyrid-3-yl oder 5-Difluormethyl-6-iod-pyrid-3-yl.
- R¹: steht bevorzugt für gegebenenfalls durch Fluor substituiertes C₁-C₅-Alkyl, C₂-C₅-Alkenyl, C₃-C₅-Cycloalkyl, C₃-C₅-Cycloalkylalkyl oder Alkoxy.
- A: steht besonders bevorzugt für den Rest 6-Fluor-pyrid-3-yl, 6-Chlor-pyrid-3-yl, 6-Brompyrid-3-yl, 6-Chlor-1,4-pyridazin-3-yl, 2-Chlor-1,3-thiazol-5-yl, 2-Chlor-pyrimidin-5-yl, 5-Fluor-6-chlor-pyrid-3-yl, 5,6-Dichlor-pyrid-3-yl, 5-Brom-6-chlor-pyrid-3-yl, 5-Fluor-6-brom-pyrid-3-yl, 5-Chlor-6-brom-pyrid-3-yl, 5,6-Dibrom-pyrid-3-yl, 5-Methyl-6-chlorpyrid-3-yl, 5-Chlor-6-iod-pyrid-3-yl oder 5-Difluormethyl-6-chlor-pyrid-3-yl.
- R¹: steht besonders bevorzugt für Methyl, Methoxy, Ethyl, Propyl, Vinyl, Allyl, Propargyl, Cyclopropyl, 2-Fluor-ethyl, 2,2-Difluor-ethyl oder 2-Fluor-cyclopropyl.
- A: steht ganz besonders bevorzugt für den Rest 6-Fluor-pyrid-3-yl, 6-Chlor-pyrid-3-yl, 6-Brom-pyrid-3-yl, 5-Fluor-6-chlor-pyrid-3-yl, 2-Chlor-1,3-thiazol-5-yl oder 5,6-Dichlorpyrid-3-yl.
- R¹: steht ganz besonders bevorzugt für Methyl, Cyclopropyl, Methoxy, 2-Fluorethyl oder 2,2-Difluor-ethyl.
- A: steht am meisten bevorzugt für den Rest 6-Chlor-pyrid-3-yl oder 5-Fluor-6-chlor-pyrid-3-yl.
- R¹: steht am meisten bevorzugt für Methyl, 2-Fluorethyl oder 2,2-Difluor-ethyl.

In einer hervorgehobenen Gruppe von Verbindungen der Formel (I) steht A für 6-Chlor-pyrid-3-yl

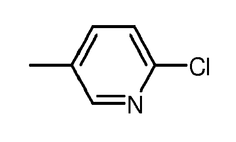

In einer weiteren hervorgehobenen Gruppe von Verbindungen der Formel (I) steht A für 6-Brompyrid-3-yl

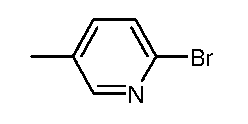

In einer weiteren hervorgehobenen Gruppe von Verbindungen der Formel (I) steht A für 6-Chlor-1,4-pyridazin-3-yl-

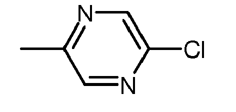

In einer weiteren hervorgehobenen Gruppe von Verbindungen der Formel (I) steht A für 2-Chlor-1,3-thiazol-5-yl-

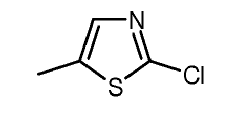

In einer weiteren hervorgehobenen Gruppe von Verbindungen der Formel (I) steht A für 5-Fluor-6-chlor-pyrid-3-yl,

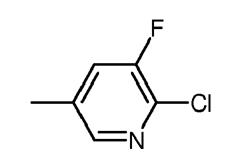

In einer weiteren hervorgehobenen Gruppe von Verbindungen der Formel (I) steht A für 5-Fluor-6-brom-pyrid-3-yl,

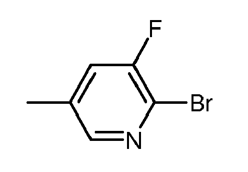

In einer weiteren hervorgehobenen Gruppe von Verbindungen der Formel (I) steht A für 5,6-Dichlor-pyrid-3-yl,

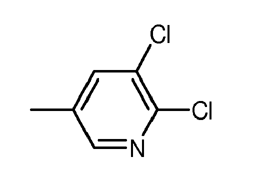

In einer weiteren hervorgehobenen Gruppe von Verbindungen der Formel (I) steht R¹ für Methyl.

In einer weiteren hervorgehobenen Gruppe von Verbindungen der Formel (I) steht R¹ für Ethyl.

In einer weiteren hervorgehobenen Gruppe von Verbindungen der Formel (I) steht R¹ für Cyclopropyl.

In einer weiteren hervorgehobenen Gruppe von Verbindungen der Formel (I) steht R¹ für 2-Fluorethyl.

In einer weiteren hervorgehobenen Gruppe von Verbindungen der Formel (I) steht R¹ für 2,2-Difluorethyl.

Die oben aufgeführten allgemeinen oder in Vorzugsbereiche aufgeführten Restedefinitionen bzw. Erläuterungen können untereinander, also auch zwischen den jeweiligen Vorzugsbereichen, beliebig kombiniert werden.

Erfindungsgemäß bevorzugt werden Verbindungen der Formel (I), in welchen eine Kombination der vorstehend als bevorzugt aufgeführten Bedeutungen vorliegt.

Erfindungsgemäß besonders bevorzugt werden Verbindungen der Formel (I), in welchen eine Kombination der vorstehend als besonders bevorzugt aufgeführten Bedeutungen vorliegt.

Erfindungsgemäß ganz besonders bevorzugt werden Verbindungen der Formel (I), in welchen eine Kombination der vorstehend als ganz besonders bevorzugt aufgeführten Bedeutungen vorliegt.

Eine bevorzugte Untergruppe der Verbindungen der Formel (I) sind solche der Formel (I-a) 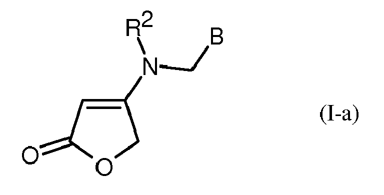 in welcher
- B: für Pyrid-2-yl oder Pyrid-4-yl steht oder für Pyrid-3-yl, welches gegebenenfalls in 6-Position substituiert ist durch Fluor, Chlor, Brom, Methyl, Trifluormethyl oder Trifluormethoxy oder für Pyridazin-3-yl, welches gegebenenfalls in 6-Position substituiert ist durch Chlor oder Methyl oder für Pyrazin-3-yl oder für 2-Chlor-pyrazin-5-yl oder für 1,3-Thiazol-5-yl, welches gegebenenfalls in 2-Position substituiert ist durch Chlor oder Methyl,
- R²: für Halogenalkyl, Halogenalkenyl, Halogencycloalkyl oder Halogencycloalkylalkyl steht.

Bevorzugte Substituenten bzw. Bereiche der in der oben und nachstehend erwähnten Formel (I-a) aufgeführten Reste werden im Folgenden erläutert.
- B: steht bevorzugt für 6-Fluor-pyrid-3-yl, 6-Chlor-pyrid-3-yl, 6-Brom-pyrid-3-yl, 6-Methylpyrid-3-yl, 6-Trifluormethyl-pyrid-3-yl, 6-Trifluormethoxypyrid-3-yl, 6-Chlor-1,4- pyridazin-3-yl, 6-Methyl-1,4-pyridazin-3-yl, 2-Chlor-1,3-thiazol-5-yl oder 2-Methyl-1,3-thiazol-5-yl.
- R²: steht bevorzugt für durch Fluor substituiertes C₁-C₅-Alkyl, C₂-C₅-Alkenyl, C₃-C₅-Cycloalkyl oder C₃-C₅-Cycloalkylalkyl.
- B: steht besonders bevorzugt für den Rest 6-Fluor-pyrid-3-yl, 6-Chlor-pyrid-3-yl, 6-Brompyrid-3-yl, 6-Chlor-1,4-pyridazin-3-yl, 2-Chlor-1,3-thiazol-5-yl.
- R²: steht besonders bevorzugt für 2-Fluor-ethyl, 2,2-Difluor-ethyl, 2-Fluor-cyclopropyl.
- B: steht ganz besonders bevorzugt für den Rest 6-Chlor-pyrid-3-yl.
- R²: steht ganz besonders bevorzugt für 2-Fluor-Ethyl oder 2,2-Difluor-ethyl.

In einer hervorgehobenen Gruppe von Verbindungen der Formel (I-a) steht B für 6-Chlor-pyrid-3-yl

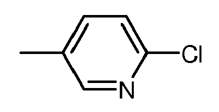

In einer weiteren hervorgehobenen Gruppe von Verbindungen der Formel (I-a) steht B für 6-Brompyrid-3-yl

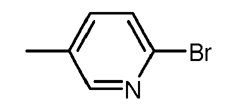

In einer weiteren hervorgehobenen Gruppe von Verbindungen der Formel (I-a) steht B für 6-Chlor-1,4-pyridazin-3-yl-

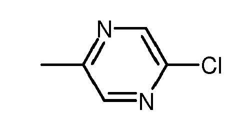

In einer weiteren hervorgehobenen Gruppe von Verbindungen der Formel (I-a) steht R² für 2-Fluorethyl.

In einer weiteren hervorgehobenen Gruppe von Verbindungen der Formel (I-a) steht R² für 2,2-Difluorethyl.

Eine weitere bevorzugte Untergruppe der der Verbindungen der Formel (I) sind solche der Formel (I-b) 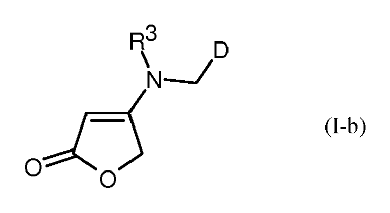 in welcher
- D: für einen Rest 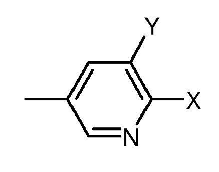
steht in welchem
- X und Y: die oben angegebenen Bedeutungen haben,
- R³: für Wasserstoff, Alkyl, Alkenyl, Alkinyl, Cycloalkyl oder Alkoxy steht,

Bevorzugte Substituenten bzw. Bereiche der in der oben und nachstehend erwähnten Formel (I-b) aufgeführten Reste werden im Folgenden erläutert.
- D: steht bevorzugt für einen der Reste 5,6-Difluor-pyrid-3-yl, 5-Chlor-6-fluor-pyrid-3-yl, 5-Brom-6-fluor-pyrid-3-yl, 5-Iod-6-fluor-pyrid-3-yl, 5-Fluor-6-chlor-pyrid-3-yl, 5,6-Dichlorpyrid-3-yl, 5-Brom-6-chlor-pyrid-3-yl, 5-Iod-6-chlor-pyrid-3-yl, 5-Fluor-6-brom-pyrid-3-yl, 5-Chlor-6-brom-pyrid-3-yl, 5,6-Dibrom-pyrid-3-yl, 5-Fluor-6-iod-pyrid-3-yl, 5-Chlor-6-iod-pyrid-3-yl, 5-Brom-6-iod-pyrid-3-yl, 5-Methyl-6-fluor-pyrid-3-yl, 5-Methyl-6-chlorpyrid-3-yl, 5-Methyl-6-brom-pyrid-3-yl, 5-Methyl-6-iod-pyrid-3-yl, 5-Difluormethyl-6-fluor-pyrid-3-yl, 5-Difluormethyl-6-chlor-pyrid-3-yl, 5-Difluormethyl-6-brom-pyrid-3-yl, 5-Difluormethyl-6-iod-pyrid-3-yl.
- R³: steht bevorzugt für C₁-C₄-Alkyl, C₂-C₄-Alkenyl, C₂-C₄-Alkinyl oder C₃-C₄-Cycloalkyl.
- D: steht besonders bevorzugt für 5-Fluor-6-chlor-pyrid-3-yl, 5,6-Dichlor-pyrid-3-yl, 5-Brom-6-chlor-pyrid-3-yl, 5-Fluor-6-brom-pyrid-3-yl, 5-Chlor-6-brom-pyrid-3-yl, 5,6-Dibrom- pyrid-3-yl, 5-Methyl-6-chlor-pyrid-3-yl, 5-Chlor-6-iod-pyrid-3-yl oder 5-Difluormethyl-6-chlor-pyrid-3-yl.
- R³: steht besonders bevorzugt für C₁-C₄-Alkyl.
- D: steht ganz besonders bevorzugt für 5-Fluor-6-chlor-pyrid-3-yl oder 5-Fluor-6-brom-pyrid-3-yl.
- R³: steht ganz besonders bevorzugt für Methyl, Ethyl, Propyl, Vinyl, Allyl, Propargyl oder Cyclopropyl.
- D: steht am meisten bevorzugt für 5-Fluor-6-chlor-pyrid-3-yl.
- R³: steht am meisten bevorzugt für Methyl oder Cyclopropyl.

In einer weiteren hervorgehobenen Gruppe von Verbindungen der Formel (I-b) steht D für 5-Fluor-6-chlor-pyrid-3-yl,

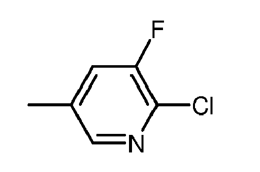

In einer weiteren hervorgehobenen Gruppe von Verbindungen der Formel (I-b) steht D für 5,6-Dichlor-pyrid-3-yl

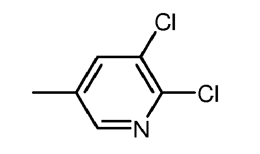

In einer weiteren hervorgehobenen Gruppe von Verbindungen der Formel (I-b) steht D für 5-Brom-6-chlor-pyrid-3-yl

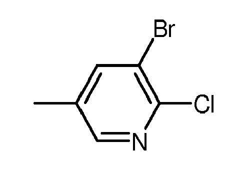

In einer weiteren hervorgehobenen Gruppe von Verbindungen der Formel (I-b) steht D für 5-Methyl-6-chlor-pyrid-3-yl

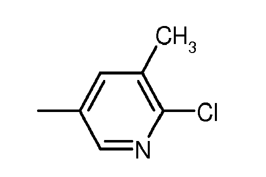

In einer weiteren hervorgehobenen Gruppe von Verbindungen der Formel (I-b) steht D für 5-Fluor-6-brom-pyrid-3-yl

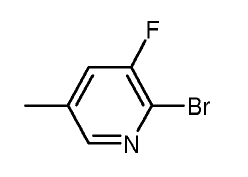

In einer weiteren hervorgehobenen Gruppe von Verbindungen der Formel (I-b) steht D für 5-Chlor-6-brom-pyrid-3-yl

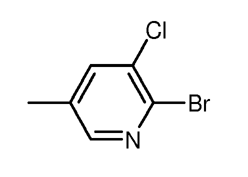

In einer weiteren hervorgehobenen Gruppe von Verbindungen der Formel (I-b) steht D für 5-Chlor-6-iod-pyrid-3-yl

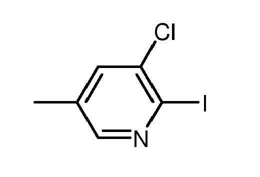

In einer weiteren hervorgehobenen Gruppe von Verbindungen der Formel (I-b) steht R³ für Methyl.

In einer weiteren hervorgehobenen Gruppe von Verbindungen der Formel (I-b) steht R³ für Ethyl.

In einer weiteren hervorgehobenen Gruppe von Verbindungen der Formel (I-b) steht R³ für Cyclopropyl.

Eine weitere bevorzugte Untergruppe der Verbindungen der Formel (I) sind solche der Formel (I-c) 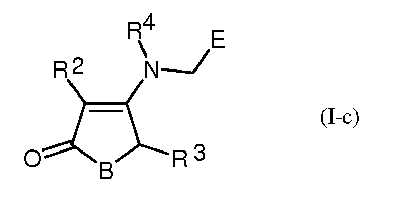 in welcher
- E: für einen Rest 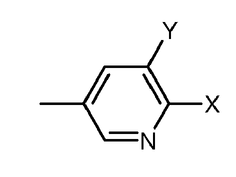
steht in welchem
- X und Y: die oben angegebenen Bedeutungen haben und
- R⁴: für Halogenalkyl, Halogenalkenyl, Halogencycloalkyl oder Halogencycloalkylalkyl steht.

Bevorzugte Substituenten bzw. Bereiche der in der oben und nachstehend erwähnten Formel (I-c) aufgeführten Reste werden im Folgenden erläutert.
- E: steht bevorzugt für einen der Reste 5,6-Difluor-pyrid-3-yl, 5-Chlor-6-fluor-pyrid-3-yl, 5-Brom-6-fluor-pyrid-3-yl, 5-Iod-6-fluor-pyrid-3-yl, 5-Fluor-6-chlor-pyrid-3-yl, 5,6-Dichlor-pyrid-3-yl, 5-Brom-6-chlor-pyrid-3-yl, 5-Iod-6-chlor-pyrid-3-yl, 5-Fluor-6-brom-pyrid-3-yl, 5-Chlor-6-brom-pyrid-3-yl, 5,6-Dibrom-pyrid-3-yl, 5-Fluor-6-iod-pyrid-3-yl, 5-Chlor-6-iod-pyrid-3-yl, 5-Brom-6-iod-pyrid-3-yl, 5-Methyl-6-fluor-pyrid-3-yl, 5-Methyl-6-chlor-pyrid-3-yl, 5-Methyl-6-brom-pyrid-3-yl, 5-Methyl-6-iod-pyrid-3-yl, 5-Difluormethyl-6-fluor-pyrid-3-yl, 5-Difluormethyl-6-chlor-pyrid-3-yl, 5-Difluormethyl-6-brom-pyrid-3-yl, 5-Difluormethyl-6-iod-pyrid-3-yl.
- R⁴: steht bevorzugt für durch Fluor substituiertes C₁-C₅-Alkyl, C₂-C₅-Alkenyl, C₃-C₅-Cycloalkyl oder C₃-C₅-Cycloalkylalkyl.
- E: steht besonders bevorzugt für 2-Chlor-pyrimidin-5-yl, 5-Fluor-6-chlor-pyrid-3-yl, 5,6-Dichlor-pyrid-3-yl, 5-Brom-6-chlor-pyrid-3-yl, 5-Fluor-6-brom-pyrid-3-yl, 5-Chlor-6- brom-pyrid-3-yl, 5,6-Dibrom-pyrid-3-yl, 5-Methyl-6-chlor-pyrid-3-yl, 5-Chlor-6-iod-pyrid-3-yl oder 5-Difluormethyl-6-chlor-pyrid-3-yl.
- R⁴: steht besonders bevorzugt für 2-Fluor-ethyl, 2,2-Difluor-ethyl, 2-Fluor-cyclopropyl.
- E: steht ganz besonders bevorzugt für 5-Fluor-6-chlor-pyrid-3-yl.
- R⁴: steht ganz besonders bevorzugt für 2-Fluor-ethyl oder 2,2-Difluor-ethyl.

In einer weiteren hervorgehobenen Gruppe von Verbindungen der Formel (I-c) steht E für 5-Fluor-6-chlor-pyrid-3-yl,

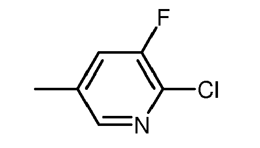

In einer weiteren hervorgehobenen Gruppe von Verbindungen der Formel (I-c) steht E für 5,6-Dichlor-pyrid-3-yl

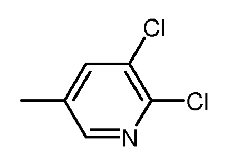

In einer weiteren hervorgehobenen Gruppe von Verbindungen der Formel (I-c) steht E für 5-Brom-6-chlor-pyrid-3-yl

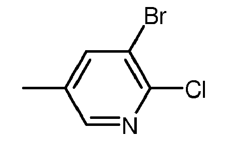

In einer weiteren hervorgehobenen Gruppe von Verbindungen der Formel (I-c) steht E für 5-Methyl-6-chlor-pyrid-3-yl

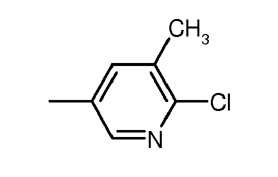

In einer weiteren hervorgehobenen Gruppe von Verbindungen der Formel (I-c) steht E für 5-Fluor-6-brom-pyrid-3-yl

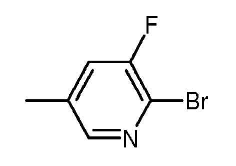

In einer weiteren hervorgehobenen Gruppe von Verbindungen der Formel (I-c) steht E für 5-Chlor-6-brom-pyrid-3-yl

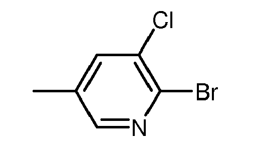

In einer weiteren hervorgehobenen Gruppe von Verbindungen der Formel (I-c) steht E für 5-Chlor-6-iod-pyrid-3-yl

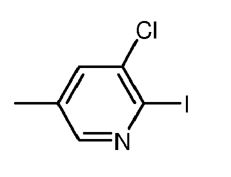

In einer weiteren hervorgehobenen Gruppe von Verbindungen der Formel (I-c) steht R⁴ für 2-Fluorethyl.

In einer weiteren hervorgehobenen Gruppe von Verbindungen der Formel (I-c) steht R⁴ für 2,2-Difluorethyl.

Eine bevorzugte Untergruppe der Verbindungen der Formel (I) sind solche der Formel (I-d) 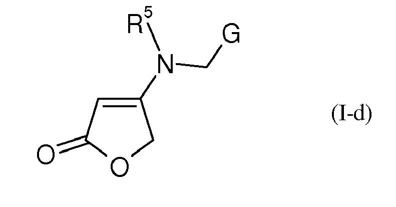 in welcher
- G: für Pyrid-2-yl oder Pyrid-4-yl steht oder für Pyrid-3-yl, welches gegebenenfalls in 6-Position substituiert ist durch Fluor, Chlor, Brom, Methyl, Trifluormethyl oder Trifluor-methoxy oder für Pyridazin-3-yl, welches gegebenenfalls in 6-Position substituiert ist durch Chlor oder Methyl oder für Pyrazin-3-yl oder für 2-Chlor-pyrazin-5-yl oder für 1,3-Thiazol-5-yl, welches gegebenenfalls in 2-Position substituiert ist durch Chlor oder Methyl, und
- R⁵: für C₁-C₄-Alkyl, Alkenyl, Alkinyl, Cycloalkyl oder Alkoxy steht.

Bevorzugte Substituenten bzw. Bereiche der in der oben und nachstehend erwähnten Formel (I-d) aufgeführten Reste werden im Folgenden erläutert.
- G: steht bevorzugt für 6-Fluor-pyrid-3-yl, 6-Chlor-pyrid-3-yl, 6-Brom-pyrid-3-yl, 6-Methylpyrid-3-yl, 6-Trifluormethyl-pyrid-3-yl, 6-Trifluormethoxypyrid-3-yl, 6-Chlor-1,4-pyridazin-3-yl, 6-Methyl-1,4-pyridazin-3-yl, 2-Chlor-1,3-thiazol-5-yl oder 2-Methyl-1,3-thiazol-5-yl.
- R⁵: steht bevorzugt für C₁-C₄-Alkyl, C₁-Alkoxy, C₂-C₄-Alkenyl, C₂-C₄-Alkinyl oder C₃-C₄-Cycloalkyl.
- G: steht besonders bevorzugt für den Rest 6-Fluor-pyrid-3-yl, 6-Chlor-pyrid-3-yl, 6-Brompyrid-3-yl, 6-Chlor-1,4-pyridazin-3-yl, 2-Chlor-1,3-thiazol-5-yl,
- R⁵: steht besonders bevorzugt für Methyl, Methoxy, Ethyl, Propyl, Vinyl, Allyl, Propargyl oder Cyclopropyl.
- G: steht ganz besonders bevorzugt für den Rest 6-Chlor-pyrid-3-yl.
- R⁵: steht ganz besonders bevorzugt für Methyl oder Cyclopropyl.

In einer hervorgehobenen Gruppe von Verbindungen der Formel (I-d) steht G für 6-Chlor-pyrid-3-yl

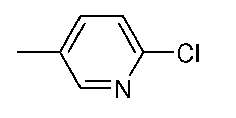

In einer weiteren hervorgehobenen Gruppe von Verbindungen der Formel (I-d) steht G für 6-Brom-pyrid-3-yl

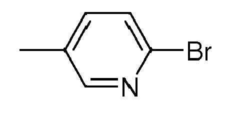

In einer weiteren hervorgehobenen Gruppe von Verbindungen der Formel (I-d) steht G für 6-Chlor-1,4-pyridazin-3-yl-

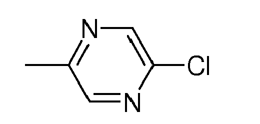

In einer weiteren hervorgehobenen Gruppe von Verbindungen der Formel (I-d) steht G für 2-Chlor-1,3-thiazol-5-yl-

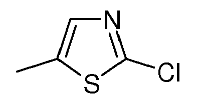

In einer weiteren hervorgehobenen Gruppe von Verbindungen der Formel (I-d) steht G für 6-Fluorpyrid-3-yl

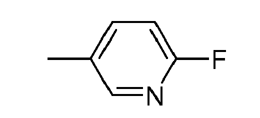

In einer weiteren hervorgehobenen Gruppe von Verbindungen der Formel (I-d) G für 6-Trifluormethyl-pyrid-3-yl-

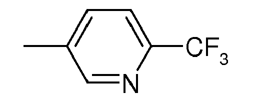

In einer weiteren hervorgehobenen Gruppe von Verbindungen der Formel (I-d) steht G für 6-Fluorpyrid-3-yl

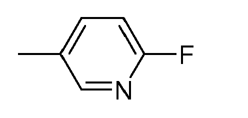

In einer weiteren hervorgehobenen Gruppe von Verbindungen der Formel (I-d) steht R⁵ für Methyl.

In einer weiteren hervorgehobenen Gruppe von Verbindungen der Formel (I-d) steht R⁵ für Cyclopropyl.

Im Einzelnen seien die folgenden besonders bevorzugten Verbindungen der allgemeinen Formel (I) genannt:
- Verbindung (I-1), 4-{[(6-Brompyrid-3-yl)methyl](2-fluorethyl)amino}furan-2(5H)-on, besitzt die Formel 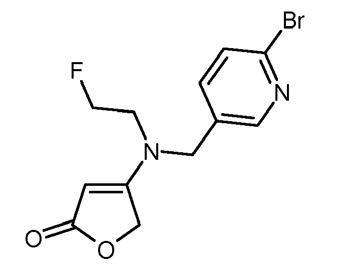 und ist bekannt aus der internationalen Patentanmeldung WO 2007/115644.
- Verbindung (1-2), 4-{[(6-Fluorpyrid-3-yl)methyl](2,2-difluorethyl)amino}furan-2(5H)-on, besitzt die Formel 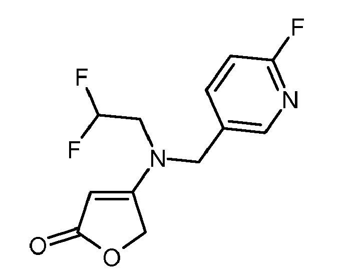 und ist bekannt aus der internationalen Patentanmeldung WO 2007/115644.
- Verbindung (1-3), 4-{[(2-Chlor-l,3-thiazol-5-yl)methyl](2-fluorethyl)amino}furan-2(5H)-on, besitzt die Formel 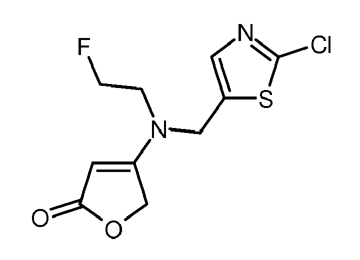 und ist bekannt aus der internationalen Patentanmeldung WO 2007/115644.
- Verbindung (I-4), 4-{[(6-Chlorpyrid-3-yl)methyl](2-fluorethyl)amino}furan-2(5H)-on, besitzt die Formel 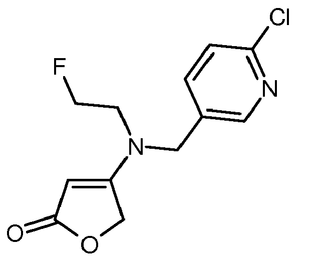 und ist bekannt aus der internationalen Patentanmeldung WO 2007/115644.
- Verbindung (1-5), 4-{[(6-Chlorpyrid-3-yl)methyl](2,2-difluorethyl)amino}furan-2(5H)-on, besitzt die Formel 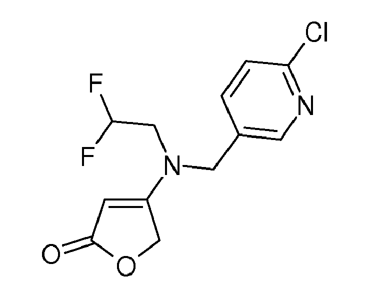 und ist bekannt aus der internationalen Patentanmeldung WO 2007/115644.
- Verbindung (1-6), 4-{[(6-Chlor-5-fluorpyrid-3-yl)methyl](methyl)amino}furan-2(5H)-on, besitzt die Formel 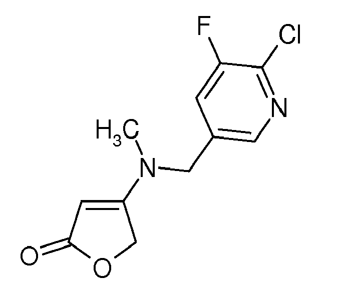 und ist bekannt aus der internationalen Patentanmeldung WO 2007/115643.
- Verbindung (1-7), 4-{[(5,6-Dichlorpyrid-3-yl)methyl](2-fluorethyl)amino}furan-2(5H)-on, besitzt die Formel 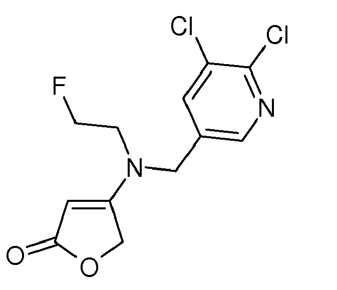 und ist bekannt aus der internationalen Patentanmeldung WO 2007/115646.
- Verbindung (1-8), 4-{[(6-Chlor-5-fluorpyrid-3-yl)methyl](cyclopropyl)amino}furan-2(5H)-on, besitzt die Formel 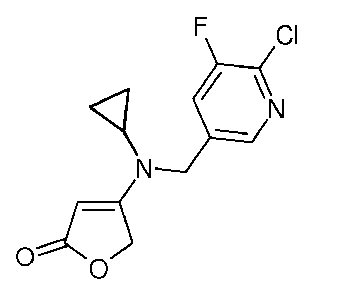 und ist bekannt aus der internationalen Patentanmeldung WO 2007/115643.
- Verbindung (I-9), 4-{[(6-Chlorpyrid-3-yl)methyl](cyclopropyl)amino}furan-2(5H)-on, besitzt die Formel 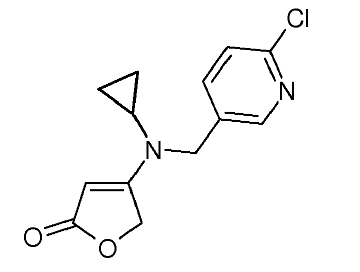 und ist bekannt aus EP 0 539 588.
- Verbindung (1-10), 4-{[(6-Chlorpyrid-3-yl)methyl](methyl)amino}furan-2(5H)-on, besitzt die Formel 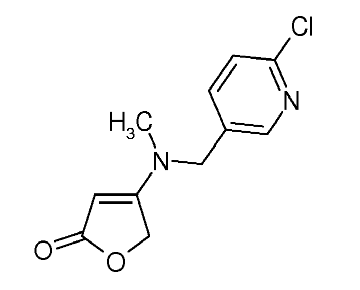
und ist bekannt aus EP 0 539 588.

Die Verbindungen der Formel (I) mit wenigstens einem basischen Zentrum sind dazu in der Lage, beispielsweise Säureadditionssalze zu bilden, z.B. mit starken anorganischen Säuren wie Mineralsäuren, z.B. Perchlorsäure, Schwefelsäure, Salpetersäure, salpetriger Säure, einer Phosphorsäure oder einer Halogenwasserstoffsäure, mit starken organischen Carbonsäuren wie unsubstituierten oder substituierten, z.B. halogensubstituierten, C₁-C₄-Alkancarbonsäuren, z.B. Essigsäure, gesättigten oder ungesättigten Dicarbonsäuren, z.B. Oxalsäure, Malonsäure, Bernsteinsäure, Maleinsäure, Fumarsäure und Phthalsäure, Hydroxycarbonsäuren, z.B. Ascorbinsäure, Milchsäure, Äpfelsäure, Weinsäure und Citronensäure, oder Benzoesäure, oder mit organischen Sulfonsäuren wie unsubstituierten oder substituierten, z.B. halogensubstituierten, C₁-C₄-Alkan- oder Arylsulfonsäuren, z.B. Methan- oder p-Toluolsulfonsäure. Die Verbindungen der Formel (I) mit wenigstens einer sauren Gruppe sind dazu in der Lage, zum Beispiel Salze mit Basen zu bilden, z.B. Metallsalze wie Alkali- oder Erdalkalisalze, z.B. Natrium-, Kalium- oder Magnesiumsalze, oder Salze mit Ammoniak oder einem organischen Amin wie Morpholin, Piperidin, Pyrrolidin, einem niederen Mono-, Di- oder Trialkylamin, z.B. Ethyl-, Diethyl-, Triethyl- oder Dimethylpropylamin, oder einem niederen Mono-, Di- oder Trihydroxyalkylamin, z.B. Mono-, Di- oder Triethanolamin. Darüber hinaus können gegebenenfalls entsprechende innere Salze gebildet werden. Im Rahmen der Erfindung sind agrochemisch vorteilhafte Salze bevorzugt. Angesichts der engen Beziehung zwischen den Verbindungen der Formel (I) in freier Form und in Form ihrer Salze sollte oben und im folgenden jeder Verweis auf die freien Verbindungen der Formel (I) oder auf ihre Salze so verstanden werden, dass auch die entsprechenden Salze bzw. die freien Verbindungen der Formel (I) eingeschlossen sind, wenn dies angebracht und zweckmäßig ist. Dies trifft entsprechend auch auf mögliche Tautomere der Verbindungen der Formel (I) und auf ihre Salze zu.

Gegenstand der vorliegenden Erfindung ist auch ein Verfahren zur selektiven Bekämpfung tierischer Schädlinge mit Verbindungen der Formel (I) ohne Schädigung bestäubender Insekten, wobei die Mortalität bestäubender Insekten und von deren Entwicklungsstadien nicht gesteigert ist, die Aktivität von Nahrungssuche und Bestäubung und die Flugaktivität bestäubender Insekten unverändert sind und die Brutentwicklung bestäubender Insekten, gemessen am Anteil von Eiern, Larven und Puppen an der Belegung der Wabenzellen, unverändert ist.

Gegenstand der vorliegenden Erfindung ist auch ein Verfahren zur selektiven Bekämpfung tierischer Schädlinge mit Verbindungen der Formel (I) ohne Schädigung bestäubender Insekten, wobei die bestäubenden Insekten ausgewählt sind aus der Superfamilie der Apoidea, beispielsweise der Bienen (Apiformes) und der Grabwespen (Spheciformes). Bevorzugt sind die bestäubenden Insekten ausgewählt aus der Familie der Apidae, beispielsweise Apini (Honigbienen, Apis) oder Bombini (Hummeln, Bombus).

Gegenstand der vorliegenden Erfindung ist weiterhin ein Verfahren zur selektiven Bekämpfung tierischer Schädlinge mit Verbindungen der Formel (I) ohne Schädigung bestäubender Insekten, wobei die Verbindungen der Formel (I) als Blattanwendung, Bodenanwendung oder Saatgutbehandlung aufgebracht werden.

Im Sinne der vorliegenden Erfindung umfasst der Begriff "Blattanwendung" beispielsweise Sprühen, Spritzen, Benetzen, Tauchen, Verdampfen, Vernebeln, Aufstreichen oder Injizieren. Der Begriff "Bodenanwendung" umfasst beispielsweise Gießen, Sprühen, Spritzen, Tropfen, Bodeninjektion oder Streuen (z. B. Pulver oder Bodengranulat). Der Begriff Saatgutbehandlung wird unten näher erläutert.

Gegenstand der vorliegenden Erfindung ist weiterhin ein Verfahren zur selektiven Bekämpfung tierischer Schädlinge mit Verbindungen der Formel (I) ohne Schädigung bestäubender Insekten, wobei die Verbindungen der Formel (I) auf blühende Pflanzen oder in der Nähe blühender Pflanzen oder auf oder in der Nähe von Pflanzen, die von bestäubenden Insekten beflogen werden, aufgebracht werden.

Im Sinne der vorliegenden Erfindung umfasst der Begriff "in der Nähe" den Umkreis um einen mit Verbindungen der Formel (I) behandelten Bereich, in dem diese Verbindungen noch nachgewiesen werden können.

Gegenstand der vorliegenden Erfindung ist auch die Verwendung von Verbindungen der Formel (I) zur selektiven Bekämpfung tierischer Schädlinge, wobei bestäubende Insekten bei Kontakt mit den Verbindungen der Formel (I) nicht geschädigt werden.

Gegenstand der vorliegenden Erfindung ist auch die Verwendung von Verbindungen der Formel (I) zur selektiven Bekämpfung tierischer Schädlinge ohne Schädigung bestäubender Insekten, wobei die Mortalität bestäubender Insekten und von deren Entwicklungsstadien nicht gesteigert ist, die Aktivität von Nahrungssuche und Bestäubung und die Flugaktivität bestäubender Insekten unverändert sind und die Brutentwicklung bestäubender Insekten, gemessen z.B. am Anteil von Eiern, Larven und Puppen an der Belegung der Wabenzellen, unverändert ist.

Gegenstand der vorliegenden Erfindung ist auch die Verwendung von Verbindungen der Formel (I) zur selektiven Bekämpfung tierischer Schädlinge ohne Schädigung bestäubender Insekten, wobei die bestäubenden Insekten ausgewählt sind aus der Superfamilie der Apoidea, beispielsweise der Bienen (Apiformes) und der Grabwespen (Spheciformes). Bevorzugt sind die bestäubenden Insekten ausgewählt aus der Familie der Apidae, beispielsweise Apini (Honigbienen, Apis) oder Bombini (Hummeln, Bombus).

Gegenstand der vorliegenden Erfindung ist weiterhin die Verwendung von Verbindungen der Formel (I) zur selektiven Bekämpfung tierischer Schädlinge ohne Schädigung bestäubender Insekten, wobei die Verbindungen der Formel (I) als Blattanwendung, Bodenanwendung oder Saatgutbehandlung aufgebracht werden.

Gegenstand der vorliegenden Erfindung ist weiterhin die Verwendung von Verbindungen der Formel (I) zur selektiven Bekämpfung tierischer Schädlinge ohne Schädigung bestäubender Insekten, wobei die Verbindungen der Formel (I) auf blühende Pflanzen oder in der Nähe blühender Pflanzen oder auf oder in der Nähe von Pflanzen, die von bestäubenden Insekten beflogen werden, aufgebracht werden.

Insbesondere eignen sich die Wirkstoffe der Formel (I) zur Behandlung von Saatgut. So entsteht ein großer Teil des durch Schädlinge verursachten Schadens an Kulturpflanzen bereits durch den Befall des Saatguts während der Lagerung und nach dem Einbringen des Saatguts in den Boden sowie während und unmittelbar nach der Keimung der Pflanzen. Diese Phase ist besonders kritisch, da die Wurzeln und Sprosse der wachsenden Pflanze besonders empfindlich sind und bereits ein geringer Schaden zum Absterben der ganzen Pflanze führen kann. Es besteht daher ein insbesondere großes Interesse daran, das Saatgut und die keimende Pflanze durch den Einsatz geeigneter Mittel zu schützen.

Die Bekämpfung von Schädlingen durch die Behandlung des Saatguts von Pflanzen ist seit langem bekannt und ist Gegenstand ständiger Verbesserungen. Dennoch ergeben sich bei der Behandlung von Saatgut eine Reihe von Problemen, die nicht immer zufrieden stellend gelöst werden können. So ist es erstrebenswert, Verfahren zum Schutz des Saatguts und der keimenden Pflanze zu entwickeln, die das zusätzliche Ausbringen von Pflanzenschutzmitteln nach der Saat oder nach dem Auflaufen der Pflanzen überflüssig machen. Es ist weiterhin erstrebenswert, die Menge des eingesetzten Wirkstoffs dahingehend zu optimieren, dass das Saatgut und die keimende Pflanze vor dem Befall durch Schädlinge bestmöglich geschützt werden, ohne jedoch die Pflanze selbst durch den eingesetzten Wirkstoff zu schädigen. Insbesondere sollten Verfahren zur Behandlung von Saatgut auch die intrinsischen insektiziden Eigenschaften transgener Pflanzen einbeziehen, um einen optimalen Schutz des Saatguts und auch der keimenden Pflanze bei einem minimalen Aufwand an Pflanzenschutzmitteln zu erreichen.

Einer der Vorteile der vorliegenden Erfindung ist es, dass aufgrund der besonderen systemischen Eigenschaften einiger der Wirkstoffe die Behandlung des Saatguts mit diesen Wirkstoffen nicht nur das Saatgut selbst, sondern auch die daraus hervorgehenden Pflanzen nach dem Auflaufen vor Schädlingen schützt. Auf diese Weise kann die unmittelbare Behandlung der Kultur zum Zeitpunkt der Aussaat oder kurz danach entfallen.

Ebenso ist es als vorteilhaft anzusehen, dass die Wirkstoffe der Formel (I) insbesondere auch bei transgenem Saatgut eingesetzt werden können, wobei die aus diesem Saatgut hervorgehenden Pflanzen zur Expression eines gegen Schädlinge gerichteten Proteins befähigt sind. Durch die Behandlung solchen Saatguts mit den Wirkstoffen der Formel (I) können bestimmte Schädlinge bereits durch die Expression des z.B. insektiziden Proteins kontrolliert werden, und zusätzlich durch die Wirkstoffe der Formel (I) vor Schäden bewahrt werden.

Die Wirkstoffe der Formel (I) eignen sich zum Schutz von Saatgut jeglicher Pflanzensorte wie bereits vorstehend genannt, die in der Landwirtschaft, im Gewächshaus, in Forsten oder im Gartenbau eingesetzt wird. Insbesondere handelt es sich dabei um Saatgut von Mais, Erdnuss, Canola, Raps, Mohn, Soja, Baumwolle, Rübe (z.B. Zuckerrübe und Futterrübe), Reis, Hirse, Weizen, Gerste, Hafer, Roggen, Sonnenblume, Tabak, Kartoffeln oder Gemüse (z.B. Tomaten, Kohlgewächs). Die Wirkstoffe der Formel (I) eignen sich ebenfalls zur Behandlung des Saatguts von Obstpflanzen und Gemüse wie vorstehend bereits genannt. Besondere Bedeutung kommt der Behandlung des Saatguts von Mais, Soja, Baumwolle, Weizen und Canola oder Raps zu.

Wie vorstehend bereits erwähnt, kommt auch der Behandlung von transgenem Saatgut mit einem Wirkstoff der Formel (I) eine besondere Bedeutung zu. Dabei handelt es sich um das Saatgut von Pflanzen, die in der Regel zumindest ein heterologes Gen enthalten, das die Expression eines Polypeptids mit insbesondere insektiziden Eigenschaften steuert. Die heterologen Gene in transgenem Saatgut können dabei aus Mikroorganismen wie Bacillus, Rhizobium, Pseudomonas, Serratia, Trichoderma, Clavibacter, Glomus oder Gliocladium stammen. Die vorliegende Erfindung eignet sich besonders für die Behandlung von transgenem Saatgut, das zumindest ein heterologes Gen enthält, das aus Bacillus sp. stammt und dessen Genprodukt Wirksamkeit gegen Maiszünsler und/oder Maiswurzel-Bohrer zeigt. Besonders bevorzugt handelt es sich dabei um ein heterologes Gen, das aus Bacillus thuringiensis stammt.

Im Rahmen der vorliegenden Erfindung wird der Wirkstoff der Formel (I) alleine oder in einer geeigneten Formulierung auf das Saatgut aufgebracht. Vorzugsweise wird das Saatgut in einem Zustand behandelt, in dem es so stabil ist, dass keine Schäden bei der Behandlung auftreten. Im Allgemeinen kann die Behandlung des Saatguts zu jedem Zeitpunkt zwischen der Ernte und der Aussaat erfolgen. Üblicherweise wird Saatgut verwendet, das von der Pflanze getrennt und von Kolben, Schalen, Stängeln, Hülle, Wolle oder Fruchtfleisch befreit wurde.

Im Allgemeinen muss bei der Behandlung des Saatguts darauf geachtet werden, dass die Menge des auf das Saatgut aufgebrachten Wirkstoffs der Formel (I) und/oder weiterer Zusatzstoffe so gewählt wird, dass die Keimung des Saatguts nicht beeinträchtigt bzw. die daraus hervorgehende Pflanze nicht geschädigt wird. Dies ist vor allem bei Wirkstoffen zu beachten, die in bestimmten Aufwandmengen phytotoxische Effekte zeigen können.

Der Wirkstoff der Formel (I) kann unmittelbar aufgebracht werden, also ohne weitere Komponenten zu enthalten und ohne verdünnt worden zu sein. In der Regel ist es vorzuziehen, den Wirkstoff in Form einer geeigneten Formulierung auf das Saatgut aufzubringen. Geeignete Formulierungen und Verfahren für die Saatgutbehandlung sind dem Fachmann bekannt und werden z.B. in den folgenden Dokumenten beschrieben: US 4,272,417 A, US 4,245,432 A, US 4,808,430 A, US 5,876,739 A, US 2003/0176428 A1, WO 2002/080675 A1, WO 2002/028186 A2.

Die erfindungsgemäß verwendbaren Wirkstoffe können in die üblichen Beizmittel-Formulierungen überführt werden, wie Lösungen, Emulsionen, Suspensionen, Pulver, Schäume, Slurries oder andere Hüllmassen für Saatgut, sowie ULV-Formulierungen.

Diese Formulierungen werden in bekannter Weise hergestellt, indem man die Wirkstoffe mit üblichen Zusatzstoffen vermischt, wie zum Beispiel übliche Streckmittel sowie Lösungs- oder Verdünnungsmittel, Farbstoffe, Netzmittel, Dispergiermittel, Emulgatoren, Entschäumer, Konservierungsmittel, sekundäre Verdickungsmittel, Kleber, Gibberelline und auch Wasser.

Als Farbstoffe, die in den erfindungsgemäß verwendbaren Beizmittel-Formulierungen enthalten sein können, kommen alle für derartige Zwecke üblichen Farbstoffe in Betracht. Dabei sind sowohl in Wasser wenig lösliche Pigmente als auch in Wasser lösliche Farbstoffe verwendbar. Als Beispiele genannt seien die unter den Bezeichnungen Rhodamin B, C.I. Pigment Red 112 und C.I. Solvent Red 1 bekannten Farbstoffe.

Als Netzmittel, die in den erfindungsgemäß verwendbaren Beizmittel-Formulierungen enthalten sein können, kommen alle zur Formulierung von agrochemischen Wirkstoffen üblichen, die Benetzung fördernden Stoffe in Frage. Vorzugsweise verwendbar sind Alkylnaphthalin-Sulfonate, wie Diisopropyl- oder Diisobutylnaphthalin-Sulfonate.

Als Dispergiermittel und/oder Emulgatoren, die in den erfindungsgemäß verwendbaren Beizmittel-Formulierungen enthalten sein können, kommen alle zur Formulierung von agrochemischen Wirkstoffen üblichen nichtionischen, anionischen und kationischen Dispergiermittel in Betracht. Vorzugsweise verwendbar sind nichtionische oder anionische Dispergiermittel oder Gemische von nichtionischen oder anionischen Dispergiermitteln. Als geeignete nichtionische Dispergiermittel sind insbesondere Ethylenoxid-Propylenoxid Blockpolymere, Alkylphenolpolyglykolether sowie Tristryrylphenolpolyglykolether und deren phosphatierte oder sulfatierte Derivate zu nennen. Geeignete anionische Dispergiermittel sind insbesondere Ligninsulfonate, Polyacrylsäuresalze und Arylsulfonat-Formaldehydkondensate.

Als Entschäumer können in den erfindungsgemäß verwendbaren Beizmittel-Formulierungen alle zur Formulierung von agrochemischen Wirkstoffen üblichen schaumhemmenden Stoffe enthalten sein. Vorzugsweise verwendbar sind Silikonentschäumer und Magnesiumstearat.

Als Konservierungsmittel können in den erfindungsgemäß verwendbaren Beizmittel-Formulierungen alle für derartige Zwecke in agrochemischen Mitteln einsetzbaren Stoffe vorhanden sein. Beispielhaft genannt seien Dichlorophen und Benzylalkoholhemiformal.

Als sekundäre Verdickungsmittel, die in den erfindungsgemäß verwendbaren Beizmittel-Formulierungen enthalten sein können, kommen alle für derartige Zwecke in agrochemischen Mitteln einsetzbaren Stoffe in Frage. Vorzugsweise in Betracht kommen Cellulosederivate, Acrylsäurederivate, Xanthan, modifizierte Tone und hochdisperse Kieselsäure.

Als Kleber, die in den erfindungsgemäß verwendbaren Beizmittel-Formulierungen enthalten sein können, kommen alle üblichen in Beizmitteln einsetzbaren Bindemittel in Frage. Vorzugsweise genannt seien Polyvinylpyrrolidon, Polyvinylacetat, Polyvinylalkohol und Tylose.

Als Gibberelline, die in den erfindungsgemäß verwendbaren Beizmittel-Formulierungen enthalten sein können, kommen vorzugsweise die Gibberelline A1, A3 (= Gibberellinsäure), A4 und A7 infrage, besonders bevorzugt verwendet man die Gibberellinsäure. Die Gibberelline sind bekannt (vgl. R. Wegler "Chemie der Pflanzenschutz- und Schädlingsbekämpfungsmittel", Bd. 2, Springer Verlag, 1970, S. 401-412).

Die erfindungsgemäß verwendbaren Beizmittel-Formulierungen können entweder direkt oder nach vorherigem Verdünnen mit Wasser zur Behandlung von Saatgut der verschiedensten Art, auch von Saatgut transgener Pflanzen, eingesetzt werden. Dabei können im Zusammenwirken mit den durch Expression gebildeten Substanzen auch zusätzliche synergistische Effekte auftreten.

Zur Behandlung von Saatgut mit den erfindungsgemäß verwendbaren Beizmittel-Formulierungen oder den daraus durch Zugabe von Wasser hergestellten Zubereitungen kommen alle üblicherweise für die Beizung einsetzbaren Mischgeräte in Betracht. Im einzelnen geht man bei der Beizung so vor, dass man das Saatgut in einen Mischer gibt, die jeweils gewünschte Menge an Beizmittel-Formulierungen entweder als solche oder nach vorherigem Verdünnen mit Wasser hinzufügt und bis zur gleichmäßigen Verteilung der Formulierung auf dem Saatgut mischt. Gegebenenfalls schließt sich ein Trocknungsvorgang an.

Die Wirkstoffe der Formel (I) eignen sich bei guter Pflanzenverträglichkeit, günstiger Warmblütertoxizität und guter Umweltverträglichkeit zum Schutz von Pflanzen und Pflanzenorganen, zur Steigerung der Ernteerträge, Verbesserung der Qualität des Erntegutes und zur Bekämpfung von tierischen Schädlingen, insbesondere Insekten, Spinnentieren, Helminthen, Nematoden und Mollusken, die in der Landwirtschaft, im Gartenbau, bei der Tierzucht, in Forsten, in Gärten und Freizeiteinrichtungen, im Vorrats- und Materialschutz sowie auf dem Hygienesektor vorkommen. Sie können vorzugsweise als Pflanzenschutzmittel eingesetzt werden. Sie sind gegen alle oder einzelne Entwicklungsstadien wirksam. Zu den oben erwähnten Schädlingen gehören:

Aus der Ordnung der Anoplura (Phthiraptera) z.B. Damalinia spp., Haematopinus spp., Linognathus spp., Pediculus spp., Trichodectes spp.

Aus der Klasse der Arachnida z.B. Acarus siro, Aceria sheldoni, Aculops spp., Aculus spp., Amblyomma spp., Argas spp., Boophilus spp., Brevipalpus spp., Bryobia praetiosa, Chorioptes spp., Dermanyssus gallinae, Eotetranychus spp., Epitrimerus pyri, Eutetranychus spp., Eriophyes spp., Hemitarsonemus spp., Hyalomma spp., Ixodes spp., Latrodectus mactans, Metatetranychus spp., Oligonychus spp., Ornithodoros spp., Panonychus spp., Phyllocoptruta oleivora, Polyphagotarsonemus latus, Psoroptes spp., Rhipicephalus spp., Rhizoglyphus spp., Sarcoptes spp., Scorpio maurus, Stenotarsonemus spp., Tarsonemus spp., Tetranychus spp., Vasates lycopersici.

Aus der Klasse der Bivalva z.B. Dreissena spp.

Aus der Ordnung der Chilopoda z.B. Geophilus spp., Scutigera spp.

Aus der Ordnung der Coleoptera z.B. Acanthoscelides obtectus, Adoretus spp., Agelastica alni, Agriotes spp., Amphimallon solstitialis, Anobium punctatum, Anoplophora spp., Anthonomus spp., Anthrenus spp., Apogonia spp., Atomaria spp., Attagenus spp., Bruchidius obtectus, Bruchus spp., Ceuthorhynchus spp., Cleonus mendicus, Conoderus spp., Cosmopolites spp., Costelytra zealandica, Curculio spp., Cryptorhynchus lapathi, Dermestes spp., Diabrotica spp., Epilachna spp., Faustinus cubae, Gibbium psylloides, Heteronychus arator, Hylamorpha elegans, Hylotrupes bajulus, Hypera postica, Hypothenemus spp., Lachnosterna consanguinea, Leptinotarsa decemlineata, Lissorhoptrus oryzophilus, Lixus spp., Lyctus spp., Meligethes aeneus, Melolontha melolontha, Migdolus spp., Monochamus spp., Naupactus xanthographus, Niptus hololeucus, Oryctes rhinoceros, Oryzaephilus surinamensis, Otiorrhynchus sulcatus, Oxycetonia jucunda, Phaedon cochleariae, Phyllophaga spp., Popillia japonica, Premnotrypes spp., Psylliodes chrysocephala, Ptinus spp., Rhizobius ventralis, Rhizopertha dominica, Sitophilus spp., Sphenophorus spp., Sternechus spp., Symphyletes spp., Tenebrio molitor, Tribolium spp., Trogoderma spp., Tychius spp., Xylotrechus spp., Zabrus spp.

Aus der Ordnung der Collembola z.B. Onychiurus armatus.

Aus der Ordnung der Dermaptera z.B. Forficula auricularia.

Aus der Ordnung der Diplopoda z.B. Blaniulus guttulatus.

Aus der Ordnung der Diptera z.B. Aedes spp., Anopheles spp., Bibio hortulanus, Calliphora erythrocephala, Ceratitis capitata, Chrysomyia spp., Cochliomyia spp., Cordylobia anthropophaga, Culex spp., Cuterebra spp., Dacus oleae, Dermatobia hominis, Drosophila spp., Fannia spp., Gastrophilus spp., Hylemyia spp., Hyppobosca spp., Hypoderma spp., Liriomyza spp.. Lucilia spp., Musca spp., Nezara spp., Oestrus spp., Oscinella frit, Pegomyia hyoscyami, Phorbia spp., Stomoxys spp., Tabanus spp., Tannia spp., Tipula paludosa, Wohlfahrtia spp.

Aus der Klasse der Gastropoda z.B. Arion spp., Biomphalaria spp., Bulinus spp., Deroceras spp., Galba spp., Lymnaea spp., Oncomelania spp., Succinea spp.

Aus der Klasse der Helminthen z.B. Ancylostoma duodenale, Ancylostoma ceylanicum, Acylostoma braziliensis, Ancylostoma spp., Ascaris lubricoides, Ascaris spp., Brugia malayi, Brugia timori, Bunostomum spp., Chabertia spp., Clonorchis spp., Cooperia spp., Dicrocoelium spp, Dictyocaulus filaria, Diphyllobothrium latum, Dracunculus medinensis, Echinococcus granulosus, Echinococcus multilocularis, Enterobius vermicularis, Faciola spp., Haemonchus spp., Heterakis spp., Hymenolepis nana, Hyostrongulus spp., Loa Loa, Nematodirus spp., Oesophagostomum spp., Opisthorchis spp., Onchocerca volvulus, Ostertagia spp., Paragonimus spp., Schistosomen spp, Strongyloides fuelleborni, Strongyloides stercoralis, Stronyloides spp., Taenia saginata, Taenia solium, Trichinella spiralis, Trichinella nativa, Trichinella britovi, Trichinella nelsoni, Trichinella pseudopsiralis, Trichostrongulus spp., Trichuris trichuria, Wuchereria bancrofti.

Weiterhin lassen sich Protozoen, wie Eimeria, bekämpfen.

Aus der Ordnung der Heteroptera z.B. Anasa tristis, Antestiopsis spp., Blissus spp., Calocoris spp., Campylomma livida, Cavelerius spp., Cimex spp., Creontiades dilutus, Dasynus piperis, Dichelops furcatus, Diconocoris hewetti, Dysdercus spp., Euschistus spp., Eurygaster spp., Heliopeltis spp., Horcias nobilellus, Leptocorisa spp., Leptoglossus phyllopus, Lygus spp., Macropes excavatus, Miridae, Nezara spp., Oebalus spp., Pentomidae, Piesma quadrata, Piezodorus spp., Psallus seriatus, Pseudacysta persea, Rhodnius spp., Sahlbergella singularis, Scotinophora spp., Stephanitis nashi, Tibraca spp., Triatoma spp.

Aus der Ordnung der Homoptera z.B. Acyrthosipon spp., Aeneolamia spp., Agonoscena spp., A-leurodes spp., Aleurolobus barodensis, Aleurothrixus spp., Amrasca spp., Anuraphis cardui, Aonidiella spp., Aphanostigma piri, Aphis spp., Arboridia apicalis, Aspidiella spp., Aspidiotus spp., Atanus spp., Aulacorthum solani, Bemisia spp., Brachycaudus helichrysii, Brachycolus spp., Brevicoryne brassicae, Calligypona marginata, Carneocephala fulgida, Ceratovacuna lanigera, Cercopidae, Ceroplastes spp., Chaetosiphon fragaefolii, Chionaspis tegalensis, Chlorita onukii, Chromaphis juglandicola, Chrysomphalus ficus, Cicadulina mbila, Coccomytilus halli, Coccus spp., Cryptomyzus ribis, Dalbulus spp., Dialeurodes spp., Diaphorina spp., Diaspis spp., Doralis spp., Drosicha spp., Dysaphis spp., Dysmicoccus spp., Empoasca spp., Eriosoma spp., Erythroneura spp., Euscelis bilobatus, Geococcus coffeae, Homalodisca coagulata, Hyalopterus arundinis, Icerya spp., Idiocerus spp., Idioscopus spp., Laodelphax striatellus, Lecanium spp., Lepidosaphes spp., Lipaphis erysimi, Macrosiphum spp., Mahanarva fimbriolata, Melanaphis sacchari, Metcalfiella spp., Metopolophium dirhodum, Monellia costalis, Monelliopsis pecanis, Myzus spp., Nasonovia ribisnigri, Nephotettix spp., Nilaparvata lugens, Oncometopia spp., Orthezia praelonga, Parabemisia myricae, Paratrioza spp., Parlatoria spp., Pemphigus spp., Peregrinus maidis, Phenacoccus spp., Phloeomyzus passerinii, Phorodon humuli, Phylloxera spp., Pinnaspis aspidistrae, Planococcus spp., Protopulvinaria pyriformis, Pseudaulacaspis pentagona, Pseudococcus spp., Psylla spp., Pteromalus spp., Pyrilla spp., Quadraspidiotus spp., Quesada gigas, Rastrococcus spp., Rhopalosiphum spp., Saissetia spp., Scaphoides titanus, Schizaphis graminum, Selenaspidus articulatus, Sogata spp., Sogatella furcifera, Sogatodes spp., Stictocephala festina, Tenalaphara malayensis, Tinocallis caryaefoliae, Tomaspis spp., Toxoptera spp., Trialeurodes vaporariorum, Trioza spp., Typhlocyba spp., Unaspis spp., Viteus vitifolii.

Aus der Ordnung der Hymenoptera z.B. Diprion spp., Hoplocampa spp., Lasius spp., Monomorium pharaonis, Vespa spp.

Aus der Ordnung der Isopoda z.B. Armadillidium vulgare, Oniscus asellus, Porcellio scaber.

Aus der Ordnung der Isoptera z.B. Reticulitermes spp., Odontotermes spp.

Aus der Ordnung der Lepidoptera z.B. Acronicta major, Aedia leucomelas, Agrotis spp., Alabama argillacea, Anticarsia spp., Barathra brassicae, Bucculatrix thurberiella, Bupalus piniarius, Cacoecia podana, Capua reticulana, Carpocapsa pomonella, Cheimatobia brumata, Chilo spp., Choristoneura fumiferana, Clysia ambiguella, Cnaphalocerus spp., Earias insulana, Ephestia kuehniella, Euproctis chrysorrhoea, Euxoa spp., Feltia spp., Galleria mellonella, Helicoverpa spp., Heliothis spp., Hofmannophila pseudospretella, Homona magnanima, Hyponomeuta padella, Laphygma spp., Lithocolletis blancardella, Lithophane antennata, Loxagrotis albicosta, Lymantria spp., Malacosoma neustria, Mamestra brassicae, Mocis repanda, Mythimna separata, Oria spp., Oulema oryzae, Panolis flammea, Pectinophora gossypiella, Phyllocnistis citrella, Pieris spp., Plutella xylostella, Prodenia spp., Pseudaletia spp., Pseudoplusia includens, Pyrausta nubilalis, Spodoptera spp., Thermesia gemmatalis, Tinea pellionella, Tineola bisselliella, Tortrix viridana, Trichoplusia spp.

Aus der Ordnung der Orthoptera z.B. Acheta domesticus, Blatta orientalis, Blattella germanica, Gryllotalpa spp., Leucophaea maderae, Locusta spp., Melanoplus spp., Periplaneta americana, Schistocerca gregaria.

Aus der Ordnung der Siphonaptera z.B. Ceratophyllus spp., Xenopsylla cheopis.

Aus der Ordnung der Symphyla z.B. Scutigerella immaculata.

Aus der Ordnung der Thysanoptera z.B. Baliothrips biformis, Enneothrips flavens, Frankliniella spp., Heliothrips spp., Hercinothrips femoralis, Kakothrips spp., Rhipiphorothrips cruentatus, Scirtothrips spp., Taeniothrips cardamoni, Thrips spp.

Aus der Ordnung der Thysanura z.B. Lepisma saccharina.

Zu den pflanzenparasitären Nematoden gehören z.B. Anguina spp., Aphelenchoides spp., Belonoaimus spp., Bursaphelenchus spp., Ditylenchus dipsaci, Globodera spp., Heliocotylenchus spp., Heterodera spp., Longidorus spp., Meloidogyne spp., Pratylenchus spp., Radopholus similis, Rotylenchus spp., Trichodorus spp., Tylenchorhynchus spp., Tylenchulus spp., Tylenchulus semipenetrans, Xiphinema spp.

Die Wirkstoffe der Formel (I) wirken nicht nur gegen Pflanzen-, Hygiene- und Vorratsschädlinge, sondern auch auf dem veterinärmedizinischen Sektor gegen tierische Parasiten (Ekto- und Endoparasiten) wie Schildzecken, Lederzecken, Räudemilben, Laufmilben, Fliegen (stechend und leckend), parasitierende Fliegenlarven, Läuse, Haarlinge, Federlinge und Flöhe. Zu diesen Parasiten gehören:

Aus der Ordnung der Anoplurida z.B. Haematopinus spp., Linognathus spp., Pediculus spp., Phtirus spp., Solenopotes spp..

Aus der Ordnung der Mallophagida und den Unterordnungen Amblycerina sowie Ischnocerina z.B. Trimenopon spp., Menopon spp., Trinoton spp., Bovicola spp., Werneckiella spp., Lepikentron spp., Damalina spp., Trichodectes spp., Felicola spp..

Aus der Ordnung Diptera und den Unterordnungen Nematocerina sowie Brachycerina z.B. Aedes spp., Anopheles spp., Culex spp., Simulium spp., Eusimulium spp., Phlebotomus spp., Lutzomyia spp., Culicoides spp., Chrysops spp., Hybomitra spp., Atylotus spp., Tabanus spp., Haematopota spp., Philipomyia spp., Braula spp., Musca spp., Hydrotaea spp., Stomoxys spp., Haematobia spp., Morellia spp., Fannia spp., Glossina spp., Calliphora spp., Lucilia spp., Chrysomyia spp., Wohlfahrtia spp., Sarcophaga spp., Oestrus spp., Hypoderma spp., Gasterophilus spp., Hippobosca spp., Lipoptena spp., Melophagus spp..

Aus der Ordnung der Siphonapterida z.B. Pulex spp., Ctenocephalides spp., Xenopsylla spp., Ceratophyllus spp..

Aus der Ordnung der Heteropterida z.B. Cimex spp., Triatoma spp., Rhodnius spp., Panstrongylus spp..

Aus der Ordnung der Blattarida z.B. Blatta orientalis, Periplaneta americana, Blattela germanica, Supella spp..

Aus der Unterklasse der Acari (Acarina) und den Ordnungen der Meta- sowie Mesostigmata z.B. Argas spp., Ornithodorus spp., Otobius spp., Ixodes spp., Amblyomma spp., Boophilus spp., Dermacentor spp., Haemophysalis spp., Hyalomma spp., Rhipicephalus spp., Dermanyssus spp., Raillietia spp., Pneumonyssus spp., Sternostoma spp., Varroa spp..

Aus der Ordnung der Actinedida (Prostigmata) und Acaridida (Astigmata) z.B. Acarapis spp., Cheyletiella spp., Ornithocheyletia spp., Myobia spp., Psorergates spp., Demodex spp., Trombicula spp., Listrophorus spp., Acarus spp., Tyrophagus spp., Caloglyphus spp., Hypodectes spp., Pterolichus spp., Psoroptes spp., Chorioptes spp., Otodectes spp., Sarcoptes spp., Notoedres spp., Knemidocoptes spp., Cytodites spp., Laminosioptes spp..

Die Wirkstoffe der Formel (I) eignen sich auch zur Bekämpfung von Arthropoden, die landwirtschaftliche Nutztiere, wie z.B. Rinder, Schafe, Ziegen, Pferde, Schweine, Esel, Kamele, Büffel, Kaninchen, Hühner, Puten, Enten, Gänse, Bienen, sonstige Haustiere wie z.B. Hunde, Katzen, Stubenvögel, Aquarienfische sowie sogenannte Versuchstiere, wie z.B. Hamster, Meerschweinchen, Ratten und Mäuse befallen. Durch die Bekämpfung dieser Arthropoden sollen Todesfälle und Leistungsminderungen (bei Fleisch, Milch, Wolle, Häuten, Eiern, Honig usw.) vermindert werden, so dass durch den Einsatz der Wirkstoffe der Formel (I) eine wirtschaftlichere und einfachere Tierhaltung möglich ist.

Die Anwendung der Wirkstoffe der Formel (I) geschieht im Veterinärsektor und bei der Tierhaltung in bekannter Weise durch enterale Verabreichung in Form von beispielsweise Tabletten, Kapseln, Tränken, Drenchen, Granulaten, Pasten, Boli, des feed-through-Verfahrens, von Zäpfchen, durch parenterale Verabreichung, wie zum Beispiel durch Injektionen (intramuskulär, subcutan, intravenös, intraperitonal u.a.), Implantate, durch nasale Applikation, durch dermale Anwendung in Form beispielsweise des Tauchens oder Badens (Dippen), Sprühens (Spray), Aufgießens (Pouron und Spot-on), des Waschens, des Einpuderns sowie mit Hilfe von wirkstoffhaltigen Formkörpern, wie Halsbändern, Ohrmarken, Schwanzmarken, Gliedmaßenbändern, Halftern, Markierungsvorrichtungen usw.

Bei der Anwendung für Vieh, Geflügel, Haustiere etc. kann man die Wirkstoffe der Formel (I) als Formulierungen (beispielsweise Pulver, Emulsionen, fließfähige Mittel), die die Wirkstoffe in einer Menge von 1 bis 80 Gew.-% enthalten, direkt oder nach 100 bis 10 000-facher Verdünnung anwenden oder sie als chemisches Bad verwenden.

Außerdem wurde gefunden, dass die erfindungsgemäßen Verbindungen eine hohe insektizide Wirkung gegen Insekten zeigen, die technische Materialien zerstören.

Beispielhaft und vorzugsweise - ohne jedoch zu limitieren - seien die folgenden Insekten genannt:

Käfer wie Hylotrupes bajulus, Chlorophorus pilosis, Anobium punctatum, Xestobium rufovillosum, Ptilinus pecticornis, Dendrobium pertinex, Ernobius mollis, Priobium carpini, Lyctus brunneus, Lyctus africanus, Lyctus planicollis, Lyctus linearis, Lyctus pubescens, Trogoxylon aequale, Minthes rugicollis, Xyleborus spec. Tryptodendron spec. Apate monachus, Bostrychus capucins, Heterobostrychus brunneus, Sinoxylon spec. Dinoderus minutus;

Hautflügler wie Sirex juvencus, Urocerus gigas, Urocerus gigas taignus, Urocerus augur;

Termiten wie Kalotermes flavicollis, Cryptotermes brevis, Heterotermes indicola, Reticulitermes flavipes, Reticulitermes santonensis, Reticulitermes lucifugus, Mastotermes darwiniensis, Zootermopsis nevadensis, Coptotermes formosanus;

Borstenschwänze wie Lepisma saccharina.

Unter technischen Materialien sind im vorliegenden Zusammenhang nicht-lebende Materialien zu verstehen, wie vorzugsweise Kunststoffe, Klebstoffe, Leime, Papiere und Kartone, Leder, Holz, Holzverarbeitungsprodukte und Anstrichmittel.

Die anwendungsfertigen Mittel können gegebenenfalls noch weitere Insektizide und gegebenenfalls noch ein oder mehrere Fungizide enthalten.

Zugleich können die erfindungsgemäßen Verbindungen zum Schutz vor Bewuchs von Gegenständen, insbesondere von Schiffskörpern, Sieben, Netzen, Bauwerken, Kaianlagen und Signalanlagen, welche mit See- oder Brackwasser in Verbindung kommen, eingesetzt werden.

Weiter können die erfindungsgemäßen Verbindungen allein oder in Kombinationen mit anderen Wirkstoffen als Antifouling-Mittel eingesetzt werden.

Die Wirkstoffe der Formel (I) eignen sich auch zur Bekämpfung von tierischen Schädlingen im Haushalts-, Hygiene- und Vorratsschutz, insbesondere von Insekten, Spinnentieren und Milben, die in geschlossenen Räumen, wie beispielsweise Wohnungen, Fabrikhallen, Büros, Fahrzeugkabinen u.ä. vorkommen. Sie können zur Bekämpfung dieser Schädlinge allein oder in Kombination mit anderen Wirk- und Hilfsstoffen in Haushaltsinsektizid-Produkten verwendet werden. Sie sind gegen alle Entwicklungsstadien wirksam. Zu diesen Schädlingen gehören:

Aus der Ordnung der Scorpionidea z.B. Buthus occitanus.

Aus der Ordnung der Acarina z.B. Argas persicus, Argas reflexus, Bryobia ssp., Dermanyssus gallinae, Glyciphagus domesticus, Ornithodorus moubat, Rhipicephalus sanguineus, Trombicula alfreddugesi, Neutrombicula autumnalis, Dermatophagoides pteronissimus, Dermatophagoides forinae.

Aus der Ordnung der Araneae z.B. Aviculariidae, Araneidae.

Aus der Ordnung der Opiliones z.B. Pseudoscorpiones chelifer, Pseudoscorpiones cheiridium, Opiliones phalangium.

Aus der Ordnung der Isopoda z.B. Oniscus asellus, Porcellio scaber.

Aus der Ordnung der Diplopoda z.B. Blaniulus guttulatus, Polydesmus spp..

Aus der Ordnung der Chilopoda z.B. Geophilus spp..

Aus der Ordnung der Zygentoma z.B. Ctenolepisma spp., Lepisma saccharina, Lepismodes inquilinus.

Aus der Ordnung der Blattaria z.B. Blatta orientalies, Blattella germanica, Blattella asahinai, Leucophaea maderae, Panchlora spp., Parcoblatta spp., Periplaneta australasiae, Periplaneta americana, Periplaneta brunnea, Periplaneta fuliginosa, Supella longipalpa.

Aus der Ordnung der Saltatoria z.B. Acheta domesticus.

Aus der Ordnung der Dermaptera z.B. Forficula auricularia.

Aus der Ordnung der Isoptera z.B. Kalotermes spp., Reticulitermes spp.

Aus der Ordnung der Psocoptera z.B. Lepinatus spp., Liposcelis spp.

Aus der Ordnung der Coleoptera z.B. Anthrenus spp., Attagenus spp., Dermestes spp., Latheticus oryzae, Necrobia spp., Ptinus spp., Rhizopertha dominica, Sitophilus granarius, Sitophilus oryzae, Sitophilus zeamais, Stegobium paniceum.

Aus der Ordnung der Diptera z.B. Aedes aegypti, Aedes albopictus, Aedes taeniorhynchus, Anopheles spp., Calliphora erythrocephala, Chrysozona pluvialis, Culex quinquefasciatus, Culex pipiens, Culex tarsalis, Drosophila spp., Fannia canicularis, Musca domestica, Phlebotomus spp., Sarcophaga carnaria, Simulium spp., Stomoxys calcitrans, Tipula paludosa.

Aus der Ordnung der Lepidoptera z.B. Achroia grisella, Galleria mellonella, Plodia interpunctella, Tinea cloacella, Tinea pellionella, Tineola bisselliella.

Aus der Ordnung der Siphonaptera z.B. Ctenocephalides canis, Ctenocephalides felis, Pulex irritans, Tunga penetrans, Xenopsylla cheopis.

Aus der Ordnung der Hymenoptera z.B. Camponotus herculeanus, Lasius fuliginosus, Lasius niger, Lasius umbratus, Monomorium pharaonis, Paravespula spp., Tetramorium caespitum.

Aus der Ordnung der Anoplura z.B. Pediculus humanus capitis, Pediculus humanus corporis, Pemphigus spp., Phylloera vastatrix, Phthirus pubis.

Aus der Ordnung der Heteroptera z.B. Cimex hemipterus, Cimex lectularius, Rhodinus prolixus, Triatoma infestans.

Die Anwendung im Bereich der Haushaltsinsektizide erfolgt allein oder in Kombination mit anderen geeigneten Wirkstoffen wie Phosphorsäureestern, Carbamaten, Pyrethroiden, Neonicotinoiden, Wachstumsregulatoren oder Wirkstoffen aus anderen bekannten Insektizidklassen.

Die Anwendung erfolgt in Aerosolen, drucklosen Sprühmitteln, z.B. Pump- und Zerstäubersprays, Nebelautomaten, Foggern, Schäumen, Gelen, Verdampferprodukten mit Verdampferplättchen aus Cellulose oder Kunststoff, Flüssigverdampfern, Gel- und Membranverdampfern, propellergetriebenen Verdampfern, energielosen bzw. passiven Verdampfungssystemen, Mottenpapieren, Mottensäckchen und Mottengelen, als Granulate oder Stäube, in Streuködern oder Köderstationen.

Beim Einsatz für das erfindungsgemäße Verfahren können die Aufwandmengen der Wirkstoffe der Formel (I) je nach Applikationsart innerhalb eines größeren Bereiches variiert werden. Die Aufwandmenge der Wirkstoffe der Formel (I) beträgt bei der Behandlung von Pflanzenteilen, z.B.

Blättern von 0,1 bis 10.000 g/ha, bevorzugt von 1 bis 1.000 g/ha, besonders bevorzugt von 10 bis 300g/ha (bei Anwendung durch Gießen oder Tropfen kann die Aufwandmenge sogar verringert werden, vor allem wenn inerte Substrate wie Steinwolle oder Perlit verwendet werden).

Diese Aufwandmengen seien nur beispielhaft und nicht limitierend im Sinne der Erfindung genannt.

Die Wirkstoffe der Formel (I) können eingesetzt werden, um Pflanzen innerhalb eines gewissen Zeitraumes nach der Behandlung gegen den Befall durch die genannten tierischen Schädlinge zu schützen. Der Zeitraum, innerhalb dessen Schutz herbeigeführt wird, erstreckt sich im Allgemeinen auf 1 bis 28 Tage, bevorzugt auf 1 bis 14 Tage, besonders bevorzugt auf 1 bis 10 Tage, ganz besonders bevorzugt auf 1 bis 7 Tage nach der Behandlung der Pflanzen mit dem Wirkstoff.

Die Wirkstoffe der Formel (I) können gegebenenfalls in bestimmten Konzentrationen bzw. Aufwandmengen auch als Herbizide, Safener, Wachstumsregulatoren oder Mittel zur Verbesserung der Pflanzeneigenschaften, oder als Mikrobizide, beispielsweise als Fungizide, Antimykotika, Bakterizide, Virizide (einschließlich Mittel gegen Viroide) oder als Mittel gegen MLO (Mycoplasmalike-organism) und RLO (Rickettsia-like-organism) verwendet werden.

Die Wirkstoffe der Formel (I) können in die üblichen Formulierungen überführt werden, wie Lösungen, Emulsionen, Spritzpulver, wasser- und ölbasierte Suspensionen, Pulver, Stäubemittel, Pasten, lösliche Pulver, lösliche Granulate, Streugranulate, Suspensions-Emulsions-Konzentrate, Wirkstoff-imprägnierte Naturstoffe, Wirkstoff-imprägnierte synthetische Stoffe, Düngemittel sowie Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln. Die Herstellung der Formulierungen erfolgt entweder in geeigneten Anlagen oder auch vor oder während der Anwendung.

Als Hilfsstoffe können solche Stoffe Verwendung finden, die geeignet sind, dem Mittel selbst oder und/oder davon abgeleitete Zubereitungen (z.B. Spritzbrühen, Saatgutbeizen) besondere Eigenschaften zu verleihen, wie bestimmte technische Eigenschaften und/oder auch besondere biologische Eigenschaften. Als typische Hilfsmittel kommen in Frage: Streckmittel, Lösemittel und Trägerstoffe.

Als Streckmittel eignen sich z.B. Wasser, polare und unpolare organische chemische Flüssigkeiten z.B. aus den Klassen der aromatischen und nicht-aromatischen Kohlenwasserstoffe (wie Paraffine, Alkylbenzole, Alkylnaphthaline, Chlorbenzole), der Alkohole und Polyole (die ggf. auch substituiert, verethert und/oder verestert sein können), der Ketone (wie Aceton, Cyclohexanon), Ester (auch Fette und Öle) und (poly-)Ether, der einfachen und substituierten Amine, Amide, Lactame (wie N-Alkylpyrrolidone) und Lactone, der Sulfone und Sulfoxide (wie Dimethylsulfoxid).

Im Falle der Benutzung von Wasser als Streckmittel können z.B. auch organische Lösemittel als Hilfslösungsmittel verwendet werden. Als flüssige Lösemittel kommen im wesentlichen in Frage: Aromaten, wie Xylol, Toluol, oder Alkylnaphthaline, chlorierte aromatische Kohlenwasserstoffe und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylsulfoxid, sowie Wasser.

Erfindungsgemäß bedeutet Trägerstoff eine natürliche oder synthetische, organische oder anorganische Substanz, welcher fest oder flüssig sein kann, mit welchen die Wirkstoffe zur besseren Anwendbarkeit, insbesondere zum Aufbringen auf Pflanzen oder Pflanzenteile oder Saatgut, gemischt oder verbunden sind. Der feste oder flüssige Trägerstoff ist im Allgemeinen inert und sollte in der Landwirtschaft verwendbar sein.

Als feste oder flüssige Trägerstoffe kommen in Frage: z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Papier, Sägemehl, Kokosnussschalen, Maiskolben und Tabakstängeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Eiweißhydrolysate; als Dispergiermittel kommen in Frage nicht-ionische und/oder ionische Stoffe, z.B. aus den Klassen der Alkohol-POE- und/oder POP-Ether, Säure- und/oder POP- POE-Ester, Alkyl-Aryl- und/oder POP- POE-Ether, Fett- und/oder POP- POE-Addukte, POE- und/oder POP-Polyol Derivate, POE- und/oder POP-Sorbitan- oder Zucker-Addukte, Alky- oder Aryl-Sulfate, Sulfonate und Phosphate oder die entsprechenden PO-Ether-Addukte. Ferner geeignete Oligo- oder Polymere, z.B. ausgehend von vinylischen Monomeren, von Acrylsäure, aus EO und/oder PO allein oder in Verbindung mit z.B. (poly-) Alkoholen oder (poly-) Aminen. Ferner können Einsatz finden Lignin und seine Sulfonsäure-Derivate, einfache und modifizierte Cellulosen, aromatische und/oder aliphatische Sulfonsäuren sowie deren Addukte mit Formaldehyd.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Weitere Additive können Duftstoffe, mineralische oder vegetabile gegebenenfalls modifizierte Öle, Wachse und Nährstoffe (auch Spurennährstoffe), wie Salze von Eisen, Mangan, Bor, Kupfer, Kobalt, Molybdän und Zink sein.

Weiterhin enthalten sein können Stabilisatoren wie Kältestabilisatoren, Konservierungsmittel, Oxidationsschutzmittel, Lichtschutzmittel oder andere die chemische und/oder physikalische Stabilität verbessernde Mittel.

Der Wirkstoffgehalt der aus den handelsüblichen Formulierungen bereiteten Anwendungsformen kann in weiten Bereichen variieren. Die Gesamtwirkstoffkonzentration oder die Wirkstoffkonzentartion der Einzelwirkstoffe der Anwendungsformen liegt im Bereich von 0,00000001 bis 97 Gew.-% Wirkstoff, vorzugsweise im Bereich von 0,0000001 bis 97 Gew.-%, besonders bevorzugt im Bereich von 0,000001 bis 83 Gew.-% oder 0,000001 bis 5 Gew.-% und ganz besonders bevorzugt im Bereich von 0,0001 bis 1 Gew. %.

Die Wirkstoffe der Formel (I) können in ihren handelsüblichen Formulierungen sowie in den aus diesen Formulierungen bereiteten Anwendungsformen in Mischung mit weiteren Wirkstoffen wie Insektiziden, Lockstoffen, Sterilantien, Bakteriziden, Akariziden, Nematiziden, Fungiziden, wachstumsregulierenden Stoffen, Herbiziden, Safenern, Düngemitteln oder Semiochemicals vorliegen.

Auch eine Mischung mit anderen bekannten Wirkstoffen, wie Herbiziden, Düngemitteln, Wachstumsregulatoren, Safenern, Semiochemicals, oder auch mit Mitteln zur Verbesserung der Pflanzeneigenschaften ist möglich.

Die Wirkstoffe der Formel (I) können ferner beim Einsatz als Insektizide in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne dass der zugesetzte Synergist selbst aktiv wirksam sein muss.

Die Wirkstoffe der Formel (I) können ferner beim Einsatz als Insektizide in ihren handelsüblichen Formulierungen sowie in den aus diesen Formulierungen bereiteten Anwendungsformen in Mischungen mit Hemmstoffen vorliegen, die einen Abbau des Wirkstoffes nach Anwendung in der Umgebung der Pflanze, auf der Oberfläche von Pflanzenteilen oder in pflanzlichen Geweben vermindern.

Die Anwendung geschieht in einer den Anwendungsformen angepassten üblichen Weise.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Sproß, Blatt, Blüte und Wurzel verstanden werden, wobei beispielhaft Blätter, Nadeln, Stengel, Stämme, Blüten, Fruchtkörper, Früchte und Saatgut sowie Wurzeln, Knollen und Rhizome aufgeführt werden. Zu den Pflanzenteilen gehört auch Erntegut sowie vegetatives und generatives Vermehrungsmaterial, beispielsweise Früchte, Samen, Stecklinge, Knollen, Rhizome, Ableger, Saatgut, Brutzwiebeln, Absenker und Ausläufer.

Die erfindungsgemäße Behandlung der Pflanzen und Pflanzenteile mit den Wirkstoffen der Formel (I) erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen, Injizieren und bei Vermehrungsmaterial, insbesondere bei Saatgut, weiterhin durch ein- oder mehrschichtiges Umhüllen.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden, wie beispielsweise Antisense- oder Cosuppressions-Technologie, RNA-Interferenz - RNAi - Technologie, gegebenenfalls in Kombination mit konventionellen Methoden erhalten wurden (Genetically Modified Organisms) und deren Teile behandelt. Die Begriffe "Teile" bzw. "Teile von Pflanzen" oder "Pflanzenteile" wurden oben erläutert.

Beschreibung der Figuren:
- Figur 1:: Tunneltest / Sprühapplikation / Bienen, akute Mortalität von Arbeiterbienen vor dem Bienenstock, DAA: Zeit vor bzw. nach Applikation in Tagen, 0 DAA a = 9:30, b = 15:15, c = 17:15 Uhr
- Figur 2:: Tunneltest / Sprühapplikation / Bienen, akute Mortalität von Puppen vor dem Bienenstock, DAA: Zeit vor bzw. nach Applikation in Tagen, 0 DAA a = 09:30, b = 15:15, c = 17:15 Uhr
- Figur 3:: Tunneltest / Sprühapplikation / Bienen, Aktivität der Nahrungssuche, DAA: Zeit vor bzw. nach Applikation in Tagen, 0 DAA a = 09:30, b = 13:00, c = 14:15, d = 15:15, e = 17:15 Uhr, 1 DAA a = 12:00, b = 15:30 Uhr
- Figur 4.1:: Tunneltest / Sprühapplikation / Bienen, Brutentwicklung, 1 Tag vor Applikation
- Figur 4.2:: Tunneltest / Sprühapplikation / Bienen, Brutentwicklung, 6 Tage nach Applikation
- Figur 4.3:: Tunneltest / Sprühapplikation / Bienen, Brutentwicklung, 14 Tage nach Applikation
- Figur 4.4:: Tunneltest / Sprühapplikation / Bienen, Brutentwicklung, 27 Tage nach Applikation
- Figur 5:: Zelttest / Gießapplikation / Bienen, Akute Mortalität von Arbeiterbienen vor dem Bienenstock, DAA: Zeit nach Applikation in Tagen, 6 DAA a = 9:30, b = 14:30 Uhr
- Figur 6:: Zelttest / Gießapplikation / Bienen, Aktivität der Nahrungssuche, DAA: Zeit nach Applikation in Tagen, 6 DAA a = 9:30, b = 14:30
- Figur 7:: Zelttest / Gießapplikation / Hummeln, Flugaktivität am Stock, DAA: Zeit vor bzw. nach Applikation in Tagen
- Figur 8:: Zelttest / Gießapplikation / Hummeln, Bestäubungsaktivität 13 und 22 Tage nach Applikation
- Figur 9:: Gewächshaustest / Rückstandstest / Bienen, Blattentnahme 1 Tag nach Applikation
- Figur 10:: Gewächshaustest / Rückstandstest / Bienen, Blattentnahme 3 Tage nach Applikation
- Figur 11:: Gewächshaustest / Rückstandstest / Bienen, Blattentnahme 6 Tage nach Applikation
- Figur 12:: Gewächshaustest / Rückstandstest / Bienen, Blattentnahme 13 Tage nach Applikation

Die Erfindung wird durch die nachfolgenden Beispiele erläutert, ohne sie zu beschränken.

### Beispiel 1

### Tunneltest / Spray-Applikation / Bienen

Der Test wurde gemäß EPPO (European Plant Protection Organisation) Leitlinie 170 wie folgt durchgeführt:

| | |
|---|---|
| **Testverbindung:** | Verbindung 1-5, SL 100 |
| **Referenzsubstanzen:** | Insegar WG 25 (Fenoxycarb) |
| | Actara WG 25 (Thiamethoxam) |
| **Aufwandmengen:** | Verbindung I-5: 75 und 150 g a.s./ha |
| | Insegar: 150 g a.s./ha |
| | Actara: 50 g a.s./ha |
| **Wasservolumen:** | 400 L/ha |
| **Kulturpflanze:** | *Phacelia tanacetifolia* |
| **Testorganismus:** | *Apis mellifera* (Bienenstock mit 3 Waben mit ca. 3500 Bienen) |
| **Design:** | 50 m² Tunnel (5m * 10m) |
| **Wiederholungen:** | 3 (Actara: 2) |
| **Applikation:** | 1 Applikation auf blühender *Phacelia* während des Bienenflugs mittels Balkenspritze |
| **Expositionszeit:** | 8 Tage |
| **Endpunkte:** | Akute Mortalität von Arbeiterbienen und Puppen vor dem Bienen-stock |
| | Aktivität der Nahrungssuche |
| | Brutentwicklung |

### Beispiel 1.1

### Akute Mortalität von Arbeiterbienen vor dem Bienenstock

Die Mortalität von Arbeiterbienen vor dem Bienenstock wird mittels einer Falle für tote Bienen (dead bee trap) bestimmt. Die Falle besteht aus Maschendraht und ist vor dem Bienenstock angebracht. Einzelne, lebende Bienen können die Maschen des Drahts passieren, der Transport toter Bienen durch die Maschen ist nicht möglich, weswegen tote Bienen sich in der Falle ansammeln.

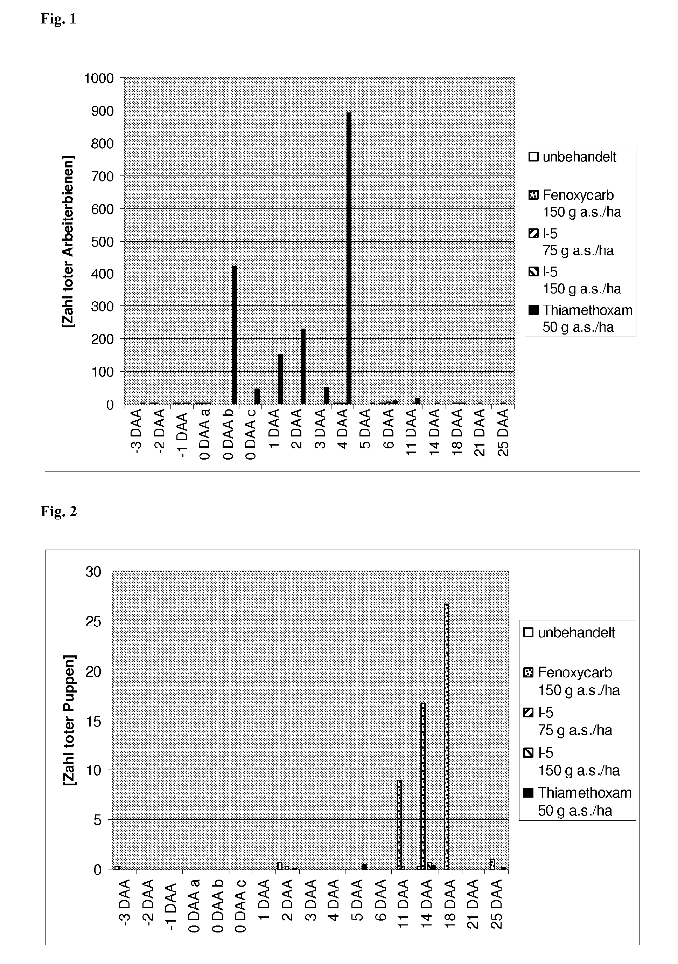

**Tabelle 1 (siehe auch Figur 1)**

| **[Zahl toter Arbeiterbienen]** | **-3 DAA** | **0 DAA b** | **0 DAA c** | **1 DAA** | **2 DAA** | **3 DAA** | **4 DAA** | **5 DAA** | **6 DAA** | **11 DAA** |
|---|---|---|---|---|---|---|---|---|---|---|
| **unbehandelt** | 0,7 | 1 | 0,3 | 0 | 0 | 0,7 | 2 | 0,3 | 3,3 | 0 |
| **Fenoxycarb** | | | | | | | | | | |
| **150 g a.s./ha** | 1 | 0 | 0 | 1,3 | 0,7 | 0 | 2 | 1,3 | 3 | 1 |
| **I-5** | | | | | | | | | | |
| **75 g a.s./ha** | 0,3 | 0 | 0,7 | 0 | 0,3 | 0,3 | 3,7 | 0,3 | 4,3 | 0 |
| **I-5** | | | | | | | | | | |
| **150 g a.s./ha** | 0,3 | 1,3 | 0,3 | 0 | 0 | 0 | 1,7 | 0,7 | 2 | 1,7 |
| **Thiamethoxam** | | | | | | | | | | |
| **50 g a.s./ha** | 1,6 | **420** | **45,3** | **152,8** | **229,4** | **50,2** | **891,6** | 2,4 | 9 | 16,5 |

| | | | | | | | | | | |
|---|---|---|---|---|---|---|---|---|---|---|
| DAA: Zeit vor bzw. nach Applikation in Tagen 0 DAA b = 15:15, c = 17:15 Uhr Thiamethoxam bewirkt eine ausgeprägte Mortalität von Arbeiterbienen vor dem Bienenstock. Die Verbindung 1-5 bewirkt keine Mortalität von Arbeiterbienen vor dem Bienenstock. | | | | | | | | | | |

### Beispiel 1.2

### Akute Mortalität von Puppen vor dem Bienenstock

**Tabelle 2 (siehe auch Figur 2)**

| **[Zahl toter Puppen]** | **-3 DAA** | **0 DAA c** | **1 DAA** | **2 DAA** | **5 DAA** | **6 DAA** | **11 DAA** | **14 DAA** | **18 DAA** | **21 DAA** | **25 DAA** |
|---|---|---|---|---|---|---|---|---|---|---|---|
| **unbehandelt** | 0,3 | 0 | 0 | 0,7 | 0 | 0 | 0 | 0,3 | 0 | 0 | 0 |
| **Fenoxycarb** | | | | | | | | | | | |
| **150 g a.s./ha** | 0 | 0 | 0 | 0 | 0 | 0 | **9** | **16,7** | **26,7** | 0 | 1 |
| **I-5 75 g a.s./ha** | 0 | 0 | 0 | 0,3 | 0 | 0 | 0,3 | 0 | 0 | 0 | 0 |
| **I-5** | | | | | | | | | | | |
| **150 g a.s./ha** | 0 | 0 | 0 | 0 | 0 | 0 | 0 | 0,7 | 0 | 0 | 0 |
| **Thiamethoxam** | | | | | | | | | | | |
| **50 g a.s./ha** | 0 | 0 | 0 | 0,1 | 0,5 | 0 | 0 | 0,4 | 0 | 0 | 0,2 |

| | | | | | | | | | | | |
|---|---|---|---|---|---|---|---|---|---|---|---|
| DAA: Zeit vor bzw. nach Applikation in Tagen O DAA c = 17:15 Uhr Fenoxycarb bewirkt 11-18 Tage nach Applikation eine Mortalität von Puppen vor dem Bienenstock. Die Verbindung 1-5 bewirkt keine Mortalität von Puppen vor dem Bienenstock. | | | | | | | | | | | |

### Beispiel 1.3

### Aktivität der Nahrungssuche

Während einer Minute werden in einem abgegrenzten Bereich von 2 x 1 m² die Bienen gezählt, die auf Blüten absitzen.

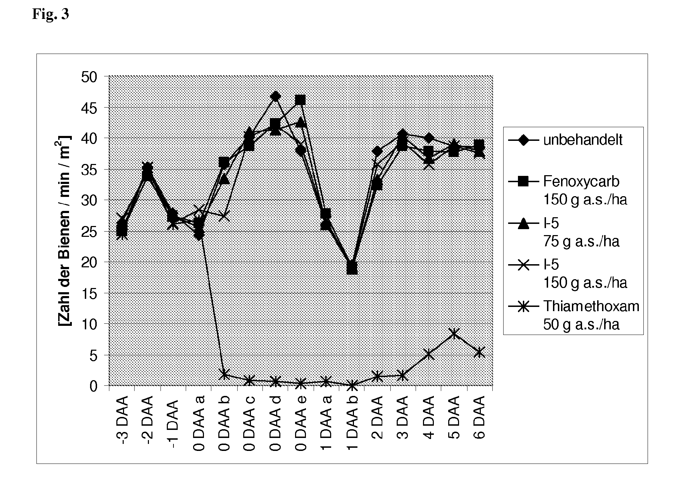

**Tabelle 3 (siehe auch Figur 3)**

| **[Zahl der Bienen / min / m²]** | **-3 DAA** | **-2 DAA** | **-1 DAA** | **0 DAA a** | **0 DAA c** | **0 DAA e** | **1 DAA b** | **2 DAA** | **3 DAA** | **6 DAA** |
|---|---|---|---|---|---|---|---|---|---|---|
| **unbehandelt** | 25,2 | 35,2 | 27,8 | 24,3 | 40,2 | 37,8 | 19,5 | 37,8 | 40,7 | 38,5 |
| **Fenoxycarb** | 25 | 33,7 | 27,3 | 26,2 | 38,7 | 46 | 19 | 32,3 | 38,7 | 38,8 |
| **150 g a.s./ha** | | | | | | | | | | |
| **I-5** | 26,5 | 34,8 | 27,3 | 25,5 | 41 | 42,7 | 18,8 | 33,3 | 40,3 | 37,8 |
| **75 g a.s./ha** | | | | | | | | | | |
| **I-5** | 27 | 34,2 | 26,3 | 28,3 | 40,2 | 39 | 19,2 | 35,7 | 39,3 | 37,5 |
| **150 g a.s./ha** | | | | | | | | | | |
| **Thiamethoxam** | 24,5 | 35,2 | 26,1 | 26,8 | **0,9** | **0,4** | 0 | **1,5** | **1,6** | **5,4** |
| **50 g a.s./ha** | | | | | | | | | | |

| | | | | | | | | | | |
|---|---|---|---|---|---|---|---|---|---|---|
| DAA: Zeit vor bzw. nach Applikation in Tagen 0 DAA a = 09:30, c = 14:15, e = 17:15 Uhr 1 DAA b = 15:30 Uhr | | | | | | | | | | |

Direkt nach Applikation von Thiamethoxam zeigt sich eine fast vollständige Einstellung der Aktivität der Nahrungssuche der Bienen. Der leichte Anstieg 6 Tage nach Applikation ist nicht auf nahrungssuchende Bienen zurückzuführen. Die Verbindung 1-5 bewirkt keine Änderung der Aktivität der Nahrungssuche.

### Beispiel 1.4

### Brutentwicklung

Über alle Waben eines Bienenstocks wird der jeweilige Anteil an Zellen bestimmt, der durch Pollen, Nektar, Eier, Larven oder Puppen belegt ist bzw. leer ist.

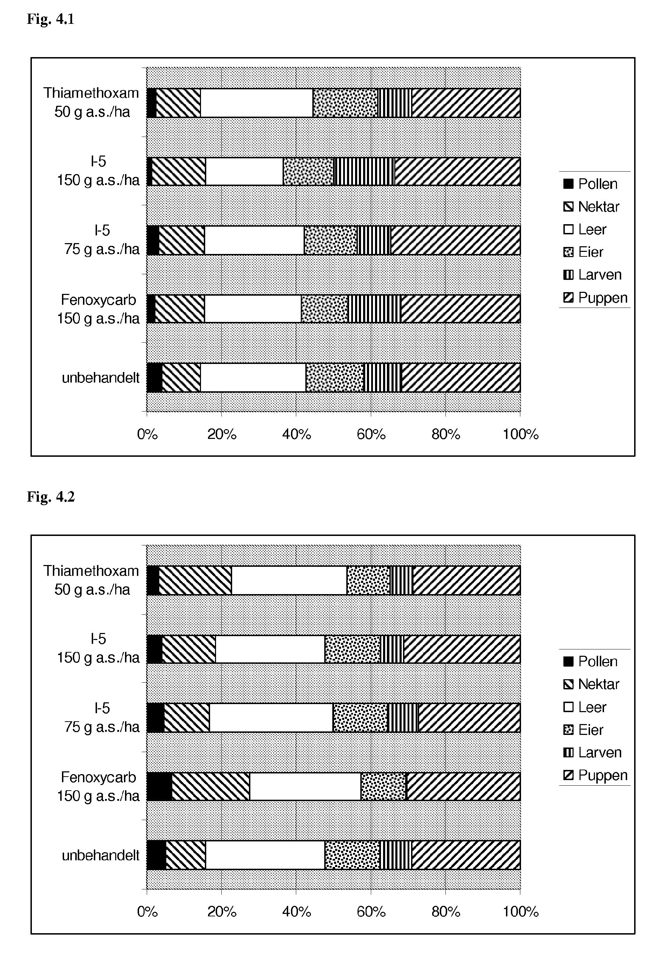

**Tabelle 4.1 (siehe auch Figur 4.1) 1 Tag vor Applikation**

| **[%]** | **Pollen** | **Nektar** | **Leer** | **Eier** | **Larven** | **Puppen** |
|---|---|---|---|---|---|---|
| **unbehandelt** | 3,9 | 10,6 | 28,3 | 15,3 | 10,3 | 31,7 |
| **Fenoxycarb** | | | | | | |
| **150 g a.s./ha** | 2,2 | 13,3 | 25,8 | 12,5 | 14,2 | 31,9 |
| **I-5** | | | | | | |
| **75 g a.s./ha** | 3,1 | 12,5 | 26,7 | 13,9 | 9,2 | 34,7 |
| **I-5** | | | | | | |
| **150 g a.s./ha** | 1,4 | 14,2 | 20,8 | 13,6 | 16,4 | 33,6 |
| **Thiamethoxam** | | | | | | |
| **50 g a.s./ha** | 2,4 | 12 | 30 | 17,5 | 9 | 29,1 |

**Tabelle 4.2 (siehe auch Figur 4.2) 6 Tage nach Applikation**

| **[%]** | **Pollen** | **Nektar** | **Leer** | **Eier** | **Larven** | **Puppen** |
|---|---|---|---|---|---|---|
| **unbehandelt** | 5 | 10,6 | 32,2 | 14,7 | 8,3 | 29,2 |
| **Fenoxycarb** | | | | | | |
| **150 g a.s./ha** | 6,7 | 20,8 | 29,7 | 12,2 | **0,3** | 30,3 |
| **I-5** | | | | | | |
| **75 g a.s./ha** | 4,4 | 12,5 | 32,8 | 14,7 | 8,3 | 27,2 |
| **I-5** | | | | | | |
| **150 g a.s./ha** | 3,9 | 14,4 | 29,4 | 15 | 6,1 | 31,1 |
| **Thiamethoxam** | | | | | | |
| **50 g a.s./ha** | 3,3 | 19,4 | 30,9 | 11,4 | 6,3 | 28,7 |

Fenoxycarb bewirkt 6 Tage nach Applikation eine starke Abnahme der Zahl der Larven. Die Verbindung 1-5 bewirkt keine Änderung der Brutentwicklung.

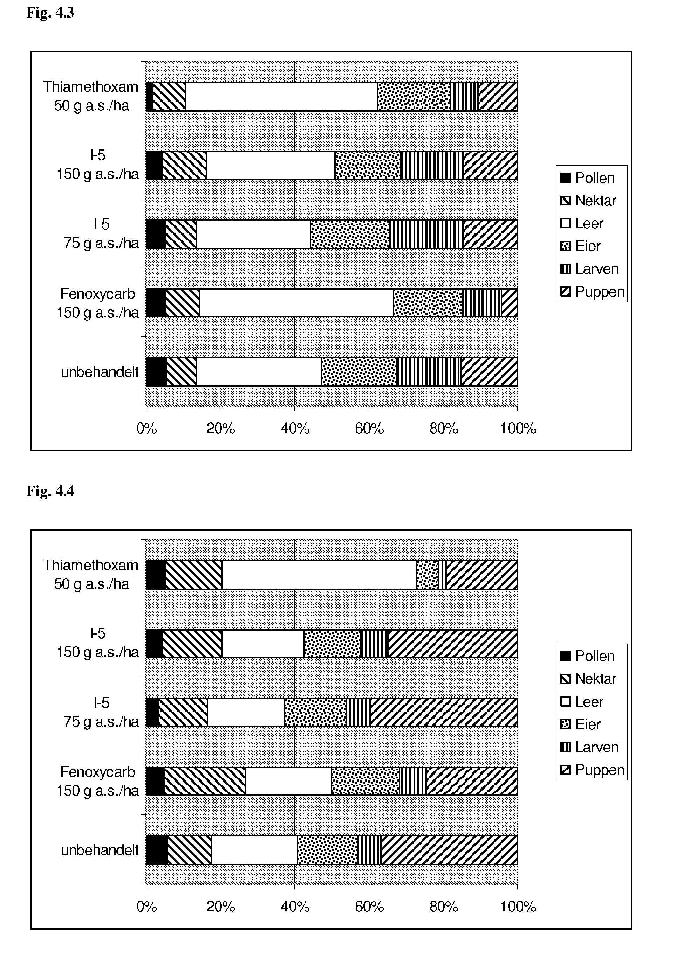

**Tabelle 4.3 (siehe auch Figur 4.3) 14 Tage nach Applikation**

| **[%]** | **Pollen** | **Nektar** | **Leer** | **Eier** | **Larven** | **Puppen** |
|---|---|---|---|---|---|---|
| **unbehandelt** | 5,6 | 8,1 | 33,6 | 20,3 | 17,2 | 15,3 |
| **Fenoxycarb** | | | | | | |
| **150 g a.s./ha** | 5,3 | 9,2 | 52,2 | 18,3 | 10,6 | **4,4** |
| **I-5** | | | | | | |
| **75 g a.s./ha** | 5 | 8,6 | 30,6 | 21,4 | 19,7 | 14,7 |
| **I-5** | | | | | | |
| **150 g a.s./ha** | 4,2 | 12,2 | 34,4 | 17,8 | 16,7 | 14,7 |
| **Thiamethoxam** | | | | | | |
| **50 g a.s./ha** | 1,5 | 9,2 | 51,8 | 19,4 | 7,4 | 10,7 |

Fenoxycarb bewirkt 14 Tage nach Applikation eine starke Abnahme der Zahl der Puppen. Die Verbindung 1-5 bewirkt keine Änderung der Brutentwicklung.

**Tabelle 4.4 (siehe auch Figur 4.4) 27 Tage nach Applikation**

| **[%]** | **Pollen** | **Nektar** | **Leer** | **Eier** | **Larven** | **Puppen** |
|---|---|---|---|---|---|---|
| **unbehandelt** | 5,8 | 11,9 | 23,1 | 16,4 | 6,1 | 36,7 |
| **Fenoxycarb** | | | | | | |
| **150 g a.s./ha** | 4,7 | 21,9 | 23,1 | 18,6 | 7,2 | 24,4 |
| **I-5** | | | | | | |
| **75 g a.s./ha** | 3,3 | 13,2 | 20,7 | 16,7 | 6,7 | 39,4 |
| **I-5** | | | | | | |
| **150 g a.s./ha** | 4,2 | 16,4 | 21,9 | 15,3 | 7,2 | 35 |
| **Thiamethoxam** | | | | | | |
| **50 g a.s./ha** | 5,1 | 15,5 | **52** | 6,1 | **2** | 19,2 |

Thiamethoxam bewirkt 27 Tage nach Applikation eine Verdoppelung der leeren Wabenzellen und eine starke Abnahme der Zahl der Larven. Die Verbindung 1-5 bewirkt keine Änderung der Brutentwicklung.

### Beispiel 2

### Zelttest / Gießapplikation / Bienen

Der Test wurde wie folgt durchgeführt:

| | |
|---|---|
| **Testverbindung:** | Verbindung 1-5, SL 300 |
| **Referenzsubstanz:** | Actara WG 25 (Thiamethoxam) |
| **Aufwandmengen:** | Verbindung I-5: 20 mg a.s. / Pflanze |
| | Actara: 10 mg a.s. / Pflanze |
| **Volumen der Angießbrühe:** | 25 ml/Pflanztopf |
| **Kulturpflanzen:** | *Lobelia erinus, Papaver nudicaule* |
| **Testorganismus:** | *Apis mellifera* (Bienenstock mit 6 Waben mit ca. 3000 Bienen) |
| **Design:** | 50 m² Zelt (5m * 10m) |
| **Wiederholungen:** | 1 |
| **Applikation:** | 1 Gießapplikation |
| **Expositionszeit:** | 13 Tage / die Bienen wurden 5 Tage nach Applikation den Pflanzen ausgesetzt. |
| **Endpunkte:** | Akute Mortalität von Arbeiterbienen vor dem Bienenstock |
| | Aktivität der Nahrungssuche |

### Beispiel 2.1

### Akute Mortalität von Arbeiterbienen vor dem Bienenstock

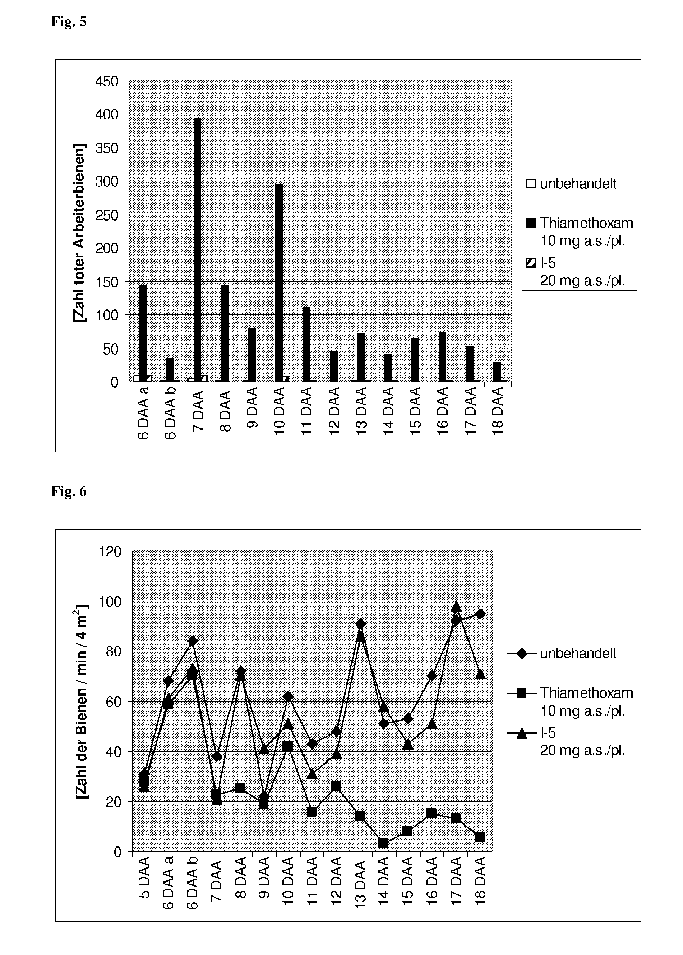

**Tabelle 5 (siehe auch Figur 5)**

| **[Zahl toter Arbeiterbienen]** | **6 DAA a** | **6 DAA b** | **7 DAA** | **8 DAA** | **9 DAA** | **10 DAA** | **11 DAA** | **14 DAA** | **16 DAA** | **18 DAA** |
|---|---|---|---|---|---|---|---|---|---|---|
| **Unbehandelt** | 9 | 1 | 5 | 1 | 2 | 0 | 0 | 0 | 0 | 0 |
| **Thiamethoxam** | **143** | **35** | **394** | **143** | **78** | **295** | **110** | **40** | **74** | **29** |
| **10 mg a.s./pl.** | | | | | | | | | | |
| **I-5** | 8 | 2 | 8 | 0 | 0 | 7 | 2 | 1 | 1 | 2 |
| **20 mg a.s./pl.** | | | | | | | | | | |

| | | | | | | | | | | |
|---|---|---|---|---|---|---|---|---|---|---|
| DAA: Zeit. nach Applikation in Tagen 6 DAA a = 9:30, b = 14:30 Uhr Thiamethoxam bewirkt eine ausgeprägte Mortalität von Arbeiterbienen vor dem Bienenstock. Die Verbindung 1-5 bewirkt keine Mortalität. | | | | | | | | | | |

### Beispiel 2.2.

### Aktivität der Nahrungssuche

**Tabelle 6 (siehe auch Figur 6)**

| **[Zahl der Bienen / min / 4 m²]** | **5 DAA** | **6 DAA b** | **7 DAA** | **8 DAA** | **9 DAA** | **11 DAA** | **13 DAA** | **15 DAA** | **16 DAA** | **17 DAA** | **18 DAA** |
|---|---|---|---|---|---|---|---|---|---|---|---|
| **unbehandelt** | 31 | 84 | 38 | 72 | 22 | 43 | 91 | 53 | 70 | 92 | 95 |
| **Thiamethoxam** | | | | | | | | | | | |
| **10 mg a.s./pl.** | 28 | 70 | 23 | 25 | 19 | 16 | **14** | **8** | **15** | **13** | **6** |
| **I-5** | | | | | | | | | | | |
| **20 mg a.s./pl.** | 26 | 73 | 21 | 70 | 41 | 31 | 86 | 43 | 51 | 98 | 71 |

| | | | | | | | | | | | |
|---|---|---|---|---|---|---|---|---|---|---|---|
| DAA: Zeit nach Applikation in Tagen 6 DAA b = 14:30 Uhr 13 Tage nach Applikation von Thiamethoxam zeigt sich eine fast vollständige Einstellung der Aktivität der Nahrungssuche der Bienen. Die Verbindung 1-5 bewirkt keine Änderung der Aktivität der Nahrungssuche. | | | | | | | | | | | |

### Beispiel 3

### Zelttest / Gießapplikation / Hummeln

Der Versuch wurde wie folgt durchgeführt:

| | |
|---|---|
| **Testverbindung:** | Verbindung 1-5, SL 300 |
| **Referenzsubstanz:** | keine |
| **Aufwandmenge:** | Verbindung I-5: 20 mg a.s. / Pflanze |
| **Kulturpflanzen:** | *Lycopersicon esculentum,* Tomato var. Bond |
| **Testorganismus:** | *Bombus terrestris (Koppert)* |
| **Design:** | 390 m² Zelt (13m * 30m) |
| **Wiederholungen:** | 3 |
| **Applikation:** | 2 Schlauchapplikationen (Tag 0 und Tag 14) |
| **Expositionszeit:** | 31 Tage / die Hummeln wurden vom 3. Tag nach der ersten Applikation bis zum 34. Tag nach der ersten Applikation den Pflanzen ausgesetzt. |
| **Endpunkte:** | Flugaktivität von Hummeln am Stock |
| | Bestäubungsaktivität von Hummeln |

### Beispiel 3.1

### Flugaktivität von Hummeln am Stock

Die Zahl der Hummeln, die im Zeitraum von 10 min in den Stock geflogen sind oder diesen verlassen haben wurde bestimmt.

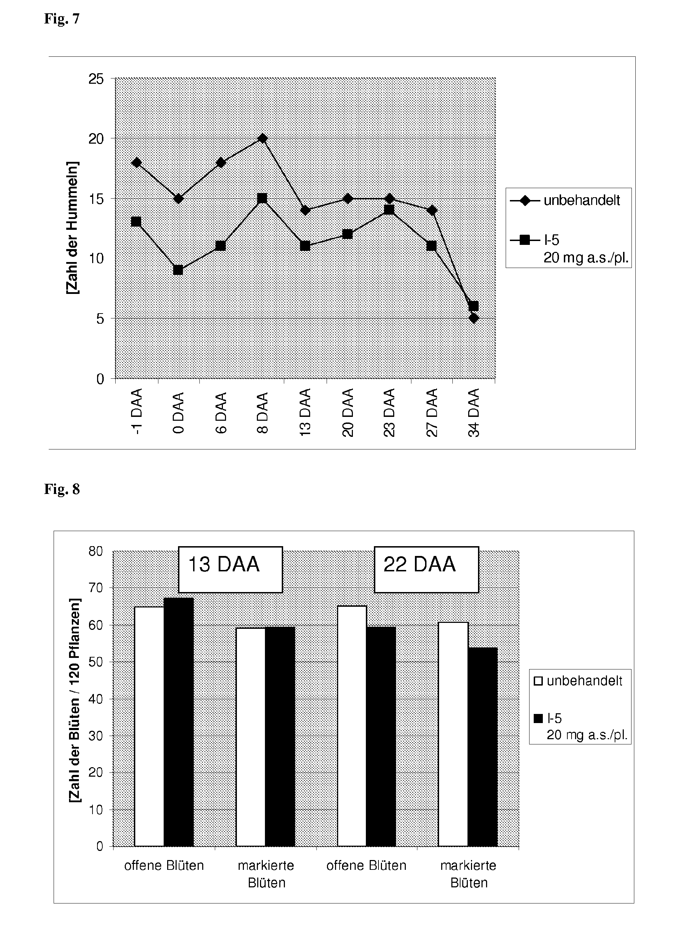

**Tabelle 7 (siehe auch Figur 7)**

| **[Zahl der Hummeln / 10 min]** | **-1 DAA** | **0 DAA** | **6 DAA** | **8 DAA** | **13 DAA** | **20 DAA** | **23 DAA** | **27 DAA** | **34 DAA** |
|---|---|---|---|---|---|---|---|---|---|
| **unbehandelt** | 18 | 15 | 18 | 20 | 14 | 15 | 15 | 14 | 5 |
| **I-5** | | | | | | | | | |
| **20 mg a.s./pl.** | 13 | 9 | 11 | 15 | 11 | 12 | 14 | 11 | 6 |

| | | | | | | | | | |
|---|---|---|---|---|---|---|---|---|---|
| DAA: Zeit nach erster Applikation in Tagen | | | | | | | | | |

Die Verbindung 1-5 bewirkt keine Änderung der Flugaktivität der Hummeln.

### Beispiel 3.2

### Bestäubungsaktivität von Hummeln

Bei Tomaten kommt es durch den Besuch von Hummeln zu einer Farbveränderung der Staubgefäße (markierte Blüten). Es wurde die Zahl offener und markierter Blüten bestimmt.

**Tabelle 8 (siehe auch Figur 8)**

| **[Zahl der Blüten]** | **DAA 13** | | **DAA 22** | |
|---|---|---|---|---|
| | **offene Blüten** | **markierte Blüten** | **offene Blüten** | **markierte Blüten** |
| **unbehandelt** | 64,8 | 59,2 | 65,1 | 60,8 |
| **I-5** | | | | |
| **20 mg a.s./pl.** | 67,3 | 59,4 | 59,3 | 53,7 |

| | | | | |
|---|---|---|---|---|
| DAA: Zeit nach erster Applikation in Tagen | | | | |

Die Verbindung 1-5 bewirkt keine Änderung der Bestäubungsaktivität der Hummeln.

### Beispiel 4

### Gewächshaustest / Rückstandstest / Bienen

Der Versuch wurde wie folgt durchgeführt:

| | |
|---|---|
| **Testverbindungen:** | Verbindungen 1-9 und 1-10, EC 50 |
| **Referenzsubstanz:** | Actara 25 WG (Thiamethoxam) |
| **Aufwandmengen:** | Verbindungen 1-9 und I-10: 100 g a.s./ha |
| | Actara: 50 g a.s./ha |
| **Kulturpflanzen:** | *Lycopersicon esculentum* |
| **Testorganismus:** | *Apis mellifera* |
| **Design:** | 180 m² Gewächshaus |
| **Applikation:** | Spritzapplikation |
| **Endpunkt:** | Mortalität von Bienen nach Kontakt mit behandelten Tomatenblättern |

Die Tomatenpflanzen wurden im Gewächshaus mit den Testverbindungen bzw. der Referenzsubstanz behandelt (Spritzappliaktion, 3 fache Wiederholung). 1, 3, 6 und 13 Tage nach Behandlung (DAA) wurden Blätter entnommen (je 5 Blattproben pro Behandlung) und in Boxen gegeben. In jede Box wurden 10 Bienen transferiert und die Boxen wurden unter kontrollierten Bedingungen aufbewahrt, wobei die Bienen mit Zuckerlösung gefüttert wurden. 24, 48 und 72 nach Transfer der Bienen wurde deren Mortalität bestimmt.

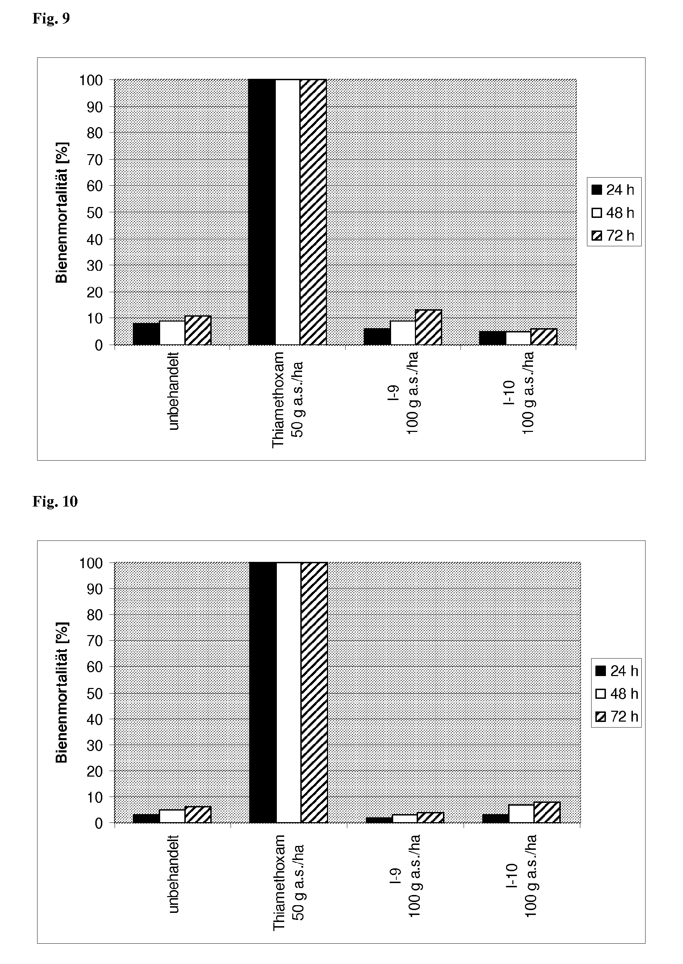

**Tabelle 9 (siehe auch Figur 9)**

| **Mortalität [%]** | **24 h** | **48 h** | **72 h** |
|---|---|---|---|
| **unbehandelt** | 8 | 9 | 11 |
| **Thiamethoxam** | | | |
| **50 g a.s./ha** | 100 | 100 | 100 |
| **I-9** | | | |
| **100 g a.s./ha** | 6 | 9 | 13 |
| **I-10** | | | |
| **100 g a.s./ha** | 5 | 5 | 6 |

Mortalität von Bienen in %, nachdem sie für unterschiedliche Zeiten Kontakt mit Tomatenblättern hatten, die 1 Tag nach Behandlung der Tomatenpflanzen mit den Testverbindungen oder der Referenzsubstanz entnommen wurden.

**Tabelle 10 (siehe auch Figur 10)**

| **Mortalität [%]** | **24 h** | **48 h** | **72 h** |
|---|---|---|---|
| **unbehandelt** | 3 | 5 | 6 |
| **Thiamethoxam** | | | |
| **50 g a.s./ha** | 100 | 100 | 100 |
| **I-9** | | | |
| **100 g a.s./ha** | 2 | 3 | 4 |
| **I-10** | | | |
| **100 g a.s./ha** | 3 | 7 | 8 |

Mortalität von Bienen in %, nachdem sie für unterschiedliche Zeiten Kontakt mit Tomatenblättern hatten, die 3 Tage nach Behandlung der Tomatenpflanzen mit den Testverbindungen oder der Referenzsubstanz entnommen wurden.

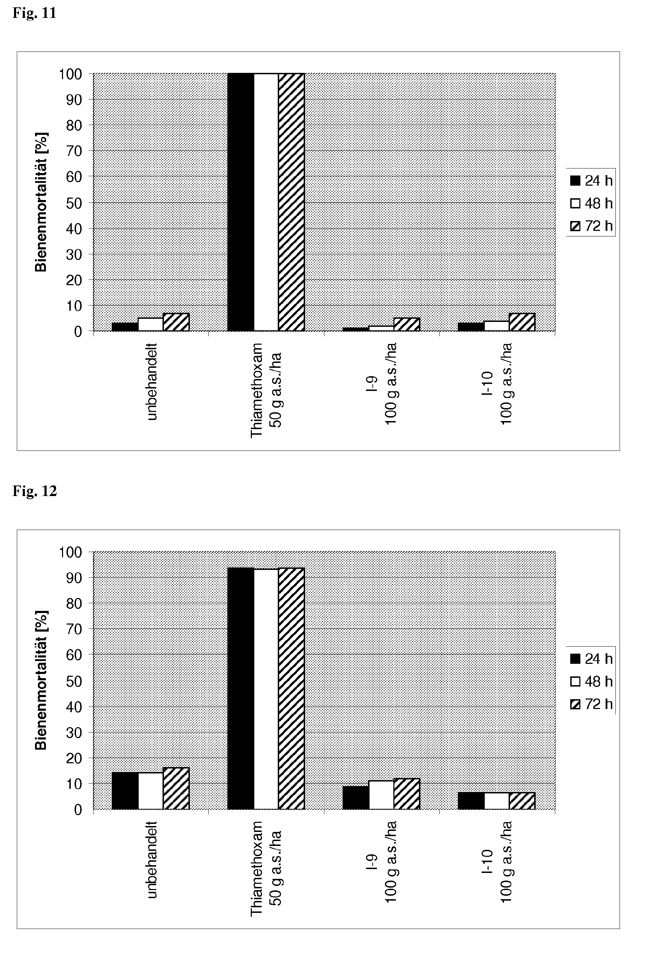

**Tabelle 11 (siehe auch Figur 11)**

| **Mortalität [%]** | **24 h** | **48 h** | **72 h** |
|---|---|---|---|
| **unbehandelt** | 3 | 5 | 7 |
| **Thiamethoxam** | | | |
| **50 g a.s./ha** | 100 | 100 | 100 |
| **I-9** | | | |
| **100 g a.s./ha** | 1 | 2 | 5 |
| **I-10** | | | |
| **100 g a.s./ha** | 3 | 4 | 7 |

Mortalität von Bienen in %, nachdem sie für unterschiedliche Zeiten Kontakt mit Tomatenblättern hatten, die 6 Tage nach Behandlung der Tomatenpflanzen mit den Testverbindungen oder der Referenzsubstanz entnommen wurden.

**Tabelle 12 (siehe auch Figur 12)**

| **Mortalität [%]** | **24 h** | **48 h** | **72 h** |
|---|---|---|---|
| **unbehandelt** | 14 | 14 | 16 |
| **Thiamethoxam** | | | |
| **50 g a.s./ha** | 93,3 | 93 | 93,3 |
| **I-9** | | | |
| **100 g a.s./ha** | 8,7 | 11 | 12 |
| **I-10** | | | |
| **100 g a.s./ha** | 6,7 | 6,7 | 6,7 |

Mortalität von Bienen in %, nachdem sie für unterschiedliche Zeiten Kontakt mit Tomatenblättern hatten, die 13 Tage nach Behandlung der Tomatenpflanzen mit den Testverbindungen oder der Referenzsubstanz entnommen wurden.

## Patentansprüche

1. Verfahren zur selektiven Bekämpfung tierischer Schädlinge mit Verbindungen der Formel (I) 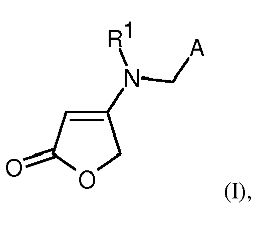 in welcher
A für Pyrid-2-yl oder Pyrid-4-yl steht oder für Pyrid-3-yl, welches gegebenenfalls in 6-Position substituiert ist durch Fluor, Chlor, Brom, Methyl, Trifluormethyl oder Trifluormethoxy oder für Pyridazin-3-yl, welches gegebenenfalls in 6-Position substituiert ist durch Chlor oder Methyl oder für Pyrazin-3-yl oder für 2-Chlorpyrazin-5-yl oder für 1,3-Thiazol-5-yl, welches gegebenenfalls in 2-Position substituiert ist durch Chlor oder Methyl, oder
A für einen Rest Pyrimidinyl, Pyrazolyl, Thiophenyl, Oxazolyl, Isoxazolyl, 1,2,4-Oxadiazolyl, Isothiazolyl, 1,2,4-Triazolyl oder 1,2,5-Thiadiazolyl steht, welcher gegebenenfalls durch Fluor, Chlor, Brom, Cyano, Nitro, C₁-C₄-Alkyl (welches gegebenenfalls durch Fluor und/oder Chlor substituiert ist), C₁-C₃-Alkylthio (welches gegebenenfalls durch Fluor und/oder Chlor substituiert ist), oder C₁-C₃-Alkylsulfonyl (welches gegebenenfalls durch Fluor und/oder Chlor substituiert ist), substituiert ist,
oder
A für einen Rest 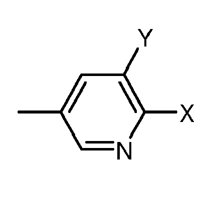
steht, in welchem
X für Halogen, Alkyl oder Halogenalkyl steht
Y für Halogen, Alkyl, Halogenalkyl, Halogenalkoxy, Azido oder Cyan steht und
R¹ für Alkyl, Halogenalkyl, Alkenyl, Halogenalkenyl, Alkinyl, Cycloalkyl, Cycloalkylalkyl, Halogencycloalkyl, Alkoxy, Alkoxyalkyl, oder Halogencycloalkylalkyl steht,
**dadurch gekennzeichnet, dass** bestäubende Insekten bei Kontakt mit den Verbindungen der Formel (I) nicht geschädigt werden.

2. Verfahren nach Anspruch 1, **dadurch gekennzeichnet, dass** die Mortalität bestäubender Insekten und von deren Puppen nicht gesteigert ist, dass die Aktivität von Nahrungssuche und Bestäubung und die Flugaktivität bestäubender Insekten unverändert sind und dass die Brutentwicklung bestäubender Insekten, gemessen am Anteil von Eiern, Larven und Puppen an der Belegung der Wabenzellen, unverändert ist.

3. Verfahren nach Anspruch 1 oder 2, **dadurch gekennzeichnet, dass** die bestäubenden Insekten ausgewählt sind aus der Superfamilie der Apoidea.

4. Verfahren nach einem der Ansprüche 1 bis 3, **dadurch gekennzeichnet, dass** die bestäubenden Insekten ausgewählt sind aus der Familie der Apidae.

5. Verfahren nach einem der Ansprüche 1 bis 4, **dadurch gekennzeichnet, dass** die Verbindungen der Formel (I) als Blattanwendung, Bodenanwendung oder Saatgutbehandlung aufgebracht werden.

6. Verfahren nach einem der Ansprüche 1 bis 5, **dadurch gekennzeichnet, dass** die Verbindungen der Formel (I) auf blühende Pflanzen oder in der Nähe blühender Pflanzen oder auf oder in der Nähe von Pflanzen, die von bestäubenden Insekten beflogen werden, aufgebracht werden.

7. Verfahren nach einem der Ansprüche 1 bis 6, **dadurch gekennzeichnet, dass** in der Verbindung der Formel (I)
A für den Rest 6-Fluor-pyrid-3-yl, 6-Chlor-pyrid-3-yl, 6-Brom-pyrid-3-yl, 5-Fluor-6-chlor-pyrid-3-yl, 2-Chlor-1,3-thiazol-5-yl oder 5,6-Dichlor-pyrid-3-yl steht und
R¹ für Methyl, Cyclopropyl, Methoxy, 2-Fluorethyl oder 2,2-Difluor-ethyl steht.

8. Verfahren nach einem der Ansprüche 1 bis 7, **dadurch gekennzeichnet, dass** die Verbindung der Formel (I) ausgewählt ist aus der Gruppe bestehend aus den Verbindungen der Formeln (1-1), (1-2), (1-3), (1-4), (1-5), (1-6), (1-7), (1-8), (1-9) und (1-10).

9. Verwendung von Verbindungen der Formel (I) 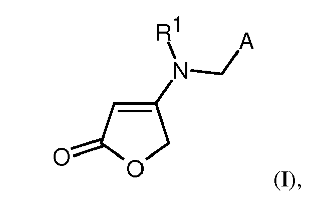 in welcher
A für Pyrid-2-yl oder Pyrid-4-yl steht oder für Pyrid-3-yl, welches gegebenenfalls in 6-Position substituiert ist durch Fluor, Chlor, Brom, Methyl, Trifluormethyl oder Trifluormethoxy oder für Pyridazin-3-yl, welches gegebenenfalls in 6-Position substituiert ist durch Chlor oder Methyl oder für Pyrazin-3-yl oder für 2-Chlorpyrazin-5-yl oder für 1,3-Thiazol-5-yl, welches gegebenenfalls in 2-Position substituiert ist durch Chlor oder Methyl, oder
A für einen Rest Pyrimidinyl, Pyrazolyl, Thiophenyl, Oxazolyl, Isoxazolyl, 1,2,4-Oxadiazolyl, Isothiazolyl, 1,2,4-Triazolyl oder 1,2,5-Thiadiazolyl steht, welcher gegebenenfalls durch Fluor, Chlor, Brom, Cyano, Nitro, C₁-C₄-Alkyl (welches gegebenenfalls durch Fluor und/oder Chlor substituiert ist), C₁-C₃-Alkylthio (welches gegebenenfalls durch Fluor und/oder Chlor substituiert ist), oder C₁-C₃-Alkylsulfonyl (welches gegebenenfalls durch Fluor und/oder Chlor substituiert ist), substituiert ist,
oder
A für einen Rest 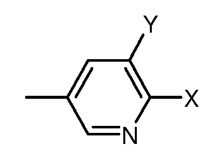
steht, in welchem
X für Halogen, Alkyl oder Halogenalkyl steht
Y für Halogen, Alkyl, Halogenalkyl, Halogenalkoxy, Azido oder Cyan steht und
R¹ für Alkyl, Halogenalkyl, Alkenyl, Halogenalkenyl, Alkinyl, Cycloalkyl, Cycloalkylalkyl, Halogencycloalkyl, Alkoxy, Alkoxyalkyl, oder Halogencycloalkylalkyl steht,
zur selektiven Bekämpfung tierischer Schädlinge, **dadurch gekennzeichnet, dass** bestäubende Insekten bei Kontakt mit den Verbindungen der Formel (I) nicht geschädigt werden.
